(19)

**Europäisches Patentamt**
**European Patent Office**
**Office européen des brevets**

(11) **EP 4 681 521 A1**

(12) **EUROPEAN PATENT APPLICATION**
published in accordance with Art. 153(4) EPC

(43) Date of publication:
**21.01.2026 Bulletin 2026/04**

(21) Application number: **24773760.4**

(22) Date of filing: **05.01.2024**

(51) International Patent Classification (IPC):
***A01D 34/00*** *(2006.01)*

(52) Cooperative Patent Classification (CPC):
**A01D 34/00**

(86) International application number:
**PCT/CN2024/070866**

(87) International publication number:
**WO 2024/193190 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.03.2023  CN 202320643209 U
20.03.2023  CN 202310303819
04.09.2023  CN 202311138857**

(71) Applicant: **Shenzhen LDrobot Co., Ltd.
Shenzhen, Guangdong 518000 (CN)**

(72) Inventors:
• **LI, Shaohai**
  **Shenzhen, Guangdong 518000 (CN)**
• **LIU, Bin**
  **Shenzhen, Guangdong 518000 (CN)**
• **LI, Ang**
  **Shenzhen, Guangdong 518000 (CN)**
• **GUO, Gaihua**
  **Shenzhen, Guangdong 518000 (CN)**
• **ZHOU, Wei**
  **Shenzhen, Guangdong 518000 (CN)**

(74) Representative: **Primiceri, Maria Vittoria et al
Praxi Intellectual Property S.p.A.
Via Leonida Bissolati, 20
00187 Roma (IT)**

(54) **SENSING MECHANISM, MEASUREMENT APPARATUS, ROBOTIC MOWER, SYSTEM, AND POSITIONING METHOD**

(57)    The embodiments of the present application relate to the field of self-propelled devices. Disclosed are a sensing mechanism, a measurement apparatus, a robotic mower, a system and a positioning method. A positioning sensing mechanism is arranged on a robotic mower. The positioning sensing mechanism comprises: a first positioning sensing assembly, the first positioning sensing assembly having a first sensitive axis; and a second positioning sensing assembly, the second positioning sensing assembly having a second sensitive axis. On the basis of a positioning signal in the direction of the first sensitive axis and/or a positioning signal in the direction of the second sensitive axis, the position of the robotic mower on a guiding line can be determined, thereby achieving effective positioning for the robotic mower in an operation area.

FIG. 3

## Description

## CROSS-REFERENCE TO RELATED APPLICATIONS

The present disclosure is filed on the basis of Chinese patent application No. 2023103038194 filed March 20, 2023 and entitled "SIGNAL DETECTION DEVICE, ROBOTIC MOWER, ROBOTIC MOWING SYSTEM, AND POSITIONING METHOD", Chinese patent application No. 2023206432094 filed March 20, 2023 and entitled "SIGNAL DETECTION DEVICE, ROBOTIC MOWER, AND ROBOTIC MOWING SYSTEM", and Chinese patent application No. 2023111388575 filed September 4, 2023 and entitled "ROBOT POSITIONING METHOD, ROBOTIC MOWER AND ROBOTIC MOWING SYSTEM", and claims priority to the Chinese patent applications, the entire contents of which are incorporated herein by reference.

## TECHNICAL FIELD

The present disclosure relates to the field of self-walking devices, and specifically to a sensing mechanism, a detection device, a robotic mower, a system, and a positioning method.

## BACKGROUND

A self-moving device such as a robotic mower is an automatic working device that autonomously moves and performs a mowing task within a preset area. A robotic mower is typically provided with a signal detection device for detecting a boundary of a preset area. The signal detection device generally acquires a boundary image of the boundary of the preset area through a camera unit, then performs image processing through an external logic unit, and wirelessly instructs the robotic mower to work.

A conventional signal detection device relies on image acquisition and image processing to instruct a robot to work. The location of the robot needs to be effectively determined in this process. However, image acquisition and image processing can distinguish whether there are weeds at the boundary and whether mowing is needed, but cannot accurately determine the location of the robotic mower in the corresponding working area.

## SUMMARY

Therefore, it is necessary to provide a sensing mechanism, a detection device, a robotic mower, a system, and a positioning method, to solve the technical problem that a conventional signal detection device cannot determine a specific location of the robotic mower in a working area.

To solve the above technical problems, a first technical scheme of the present disclosure provides a positioning sensing mechanism, arranged on a robotic mower and including:

a first positioning sensing assembly having a first sensitive axis; and
a second positioning sensing assembly having a second sensitive axis;
where a location of the robotic mower on a wire is determined based on a positioning signal propagating along the first sensitive axis and/or a positioning signal propagating along the second sensitive axis, and the wire is configured to define a working range of the robotic mower.

In some embodiments of the positioning sensing mechanism, the first positioning sensing assembly and the second positioning sensing assembly are arranged on a central axis of the robotic mower.

In some embodiments of the positioning sensing mechanism, the first sensitive axis and the second sensitive axis are perpendicular or parallel to each other.

To solve the above technical problems, a second technical scheme of present disclosure provides a signal detection device, including:

a positioning sensing mechanism of the first technical scheme of the present disclosure; and
a boundary sensing mechanism, including a plurality of boundary sensing assemblies, where the positioning sensing mechanism is arranged between/among the plurality of boundary sensing assemblies.

In some embodiments of the signal detection device, each of the boundary sensing assemblies has a third sensitive axis and is configured to detect a boundary signal propagating along the respective third sensitive axis, and the third sensitive axes of the plurality of the boundary sensing assemblies are parallel to each other.

To solve the above technical problems, a third technical scheme of the present disclosure provides a robotic mower, including:

a housing, provided with an accommodating cavity;

the signal detection device of the second technical scheme of the present disclosure, accommodated in the accommodating cavity;

a mowing mechanism, fixed to the housing; and a walking mechanism, fixed to the housing.

In some embodiments of the robotic mower, a bottom of the accommodating cavity is not lower than a lower edge of the housing.

In some embodiments of the robotic mower, the mowing mechanism further includes a cutter head assembly, and a bottom of the accommodating cavity is not lower than a lowest position of the cutter head assembly.

**EP 4 681 521 A1**

In some embodiments of the robotic mower, a distance between the first positioning sensing assembly and the second positioning sensing assembly is greater than a diameter of the cutter head assembly.

In some embodiments of the robotic mower, the signal detection device is located in the middle of the walking mechanism.

In some embodiments of the robotic mower, the signal detection device is located on a central axis of the robotic mower.

To solve the above technical problems, a fourth technical scheme of the present disclosure provides a robotic mowing system, including:

the robotic mower of the second technical scheme of the present disclosure;

a charging station; and a wire, where the charging station is configured to supply electrical energy to the robotic mower, and the wire is connected to the charging station and is configured to position the robotic mower and define a working range of the robotic mower.

To solve the above technical problems, a fifth technical scheme of the present disclosure provides a method for positioning a robotic mower, including:

acquiring a first positioning signal propagating along a first sensitive axis by a first positioning sensing assembly;

acquiring a second positioning signal propagating along a second sensitive axis by a second positioning sensing assembly; and

determining a location of the robotic mower on a wire according to the first positioning signal and/or the second positioning signal, where the wire is configured to define a working range of the robotic mower.

To solve the above technical problems, a sixth technical scheme of the present disclosure provides a robotic mower, including a control module, a driving module, a mowing module, and a sensing module, where the control module is respectively communicatively connected to the driving module, the mowing module, and the sensing module;

the mowing module is configured to perform mowing;

the driving module is configured to drive the robotic mower to move;

the sensing module includes at least two positioning sensing assemblies; and

the control module is configured to execute the method for positioning a robotic mower of the fifth technical scheme of the present disclosure, and control operation of the driving module and the mowing module.

The embodiments of the present disclosure have the following beneficial effects.

Based on the positioning sensing mechanism, the signal detection device, the robotic mower, and the robotic mowing system including the positioning sensing mechanism, and the method for positioning a robotic mower based on the positioning sensing mechanism, a plurality of positioning sensing assemblies having a sensitive axis are introduced, and the location of the robotic mower on the wire is determined based on positioning signals propagating along the sensitive axes, such that the positioning sensing mechanism has excellent performance in determining a boundary location, thereby achieving effective positioning of the robotic mower in the working area.

**BRIEF DESCRIPTION OF DRAWINGS**

To describe the technical schemes of the embodiments of the present disclosure or the related art more clearly, the following briefly introduces the accompanying drawings required for describing the embodiments or the related art. Apparently, the accompanying drawings in the following description show only some embodiments of the present disclosure, and those having ordinary skills in the art may still derive other drawings from these accompanying drawings without creative efforts.

FIG. 1 is a perspective view of a robotic mowing system according to an embodiment of the present disclosure;

FIG. 2 is a perspective view of the robotic mowing system shown in FIG. 1, where an upper cover is separated from a bottom shell;

FIG. 3 is a perspective view of a signal detection device in the robotic mowing system shown in FIG. 1;

FIG. 4 is a schematic assembled view of the bottom shell and the signal detection device in the robotic mowing system shown in FIG. 1;

FIG. 5 is a top view of FIG. 4;

FIG. 6 is a schematic structural enlarged view of part A in FIG. 5;

FIG. 7 is a cross-sectional view taken along line B-B in FIG. 5;

FIG. 8 is a schematic structural enlarged view of part C in FIG. 7;

FIG. 9 is an overall flowchart of a method for positioning a robotic mower according to an embodiment;

FIG. 10 is a flowchart of a method for positioning a robotic mower according to an embodiment of the present disclosure;

FIG. 11 is a schematic diagram of mounting of sensors according to an embodiment of the present disclosure;

FIG. 12 is a schematic diagram of signal transmission and reception according to an embodiment of the present disclosure;

FIG. 13 is a schematic diagram of the timing of signal waveforms according to an embodiment of the present disclosure;

FIG. 14 is a schematic diagram showing turning of a robot during traveling according to an embodiment of the present disclosure; and

FIG. 15 is another schematic diagram showing turning of a robot during traveling according to an embodiment of the present disclosure.

Reference numerals:

1 - positioning sensing mechanism, 2 - boundary sensing mechanism, 5 - first collision sensor, 6 - second collision sensor, 7 - first lifting sensor, 8 - second lifting sensor, 9 - cutter head assembly, 10 - robotic mower, 11 - housing, 12 - signal detection device, 13 - mowing mechanism, 14 - walking mechanism, 20 - charging station, 30 - wire, 100 - accommodating cavity, 111 - upper cover, 112 - bottom shell, 121 - first positioning sensing assembly, 1211 - first sensitive axis, 122 - second positioning sensing assembly, 1221 - second sensitive axis, 1231 - third sensitive axis, 123 - boundary sensing assembly, 141 - driving wheel, 142 - driven wheel, 1000 - first wire segment, 2000 - second wire segment.

**DETAILED DESCRIPTION**

The technical schemes in the embodiments of the present disclosure are clearly and completely described in the following with reference to the accompanying drawings in the embodiments of the present disclosure. Apparently, the described embodiments are merely some rather than all of the embodiments of the present disclosure. All other embodiments obtained by those having ordinary skills in the art based on the embodiments of the present disclosure without making creative efforts shall fall within the protection scope of the present disclosure.

It should be noted that like numerals and letters denote like terms in the following drawings. Therefore, once an item is defined in one accompanying drawing, the item does not need to be further defined and explained in the subsequent accompanying drawings.

In the description of the embodiments of the present disclosure, it should be noted that the orientation or positional relationships indicated by the terms "up," "down," "inside," "outside," etc., are based on the orientation or positional relationships shown in the drawings or the usual orientation or positional relationships of the product of the present disclosure during use, and are only for the convenience of describing the embodiments of the present disclosure and simplifying the description, rather than indicating or implying that the apparatus or element described must have a specific orientation or be constructed and operated in a specific orientation, and therefore are not to be construed as limiting the present disclosure.

In addition, the terms "first," "second" and the like are merely used to distinguish the described objects, and are not intended to indicate or imply relative importance.

It should be noted that the features in the embodiments of the present disclosure may be combined with each other without conflict.

A self-moving device such as a robotic mower is an automatic working device that autonomously moves and performs a mowing task within a preset area. A robotic mower is typically provided with a signal detection device for detecting a boundary of a preset area. The signal detection device generally acquires a boundary image of the boundary of the preset area through a camera unit, then performs image processing through an external logic unit, and wirelessly instructs the robotic mower to work.

A conventional signal detection device relies on image acquisition and image processing to instruct a robot to work. The location of the robot needs to be effectively determined in this process. However, image acquisition and image processing can distinguish whether there are weeds at the boundary and whether mowing is needed, but limited by the differences in the imaging effect of image acquisition and the technical means of image processing, cannot accurately determine the location of the robotic mower in the corresponding working area.

To solve the above technical problems, embodiments of the present disclosure provide a sensing mechanism, a detection device, a robotic mower, a system, and a positioning method.

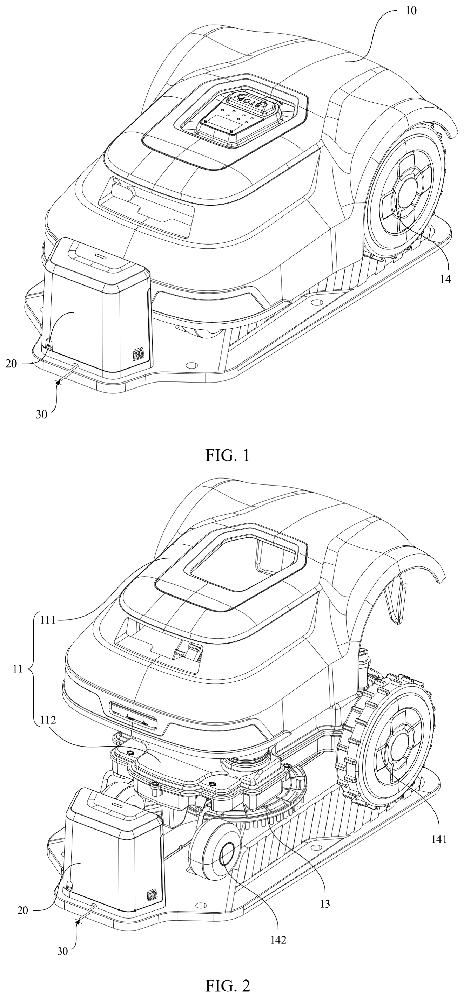

A robotic mowing system provided by the present disclosure will be described with reference to FIG. 1 to FIG. 3. The robotic mowing system includes a robotic mower 10, a charging station 20, and a wire 30. The wire 30 is connected to the charging station 20 and is configured to position the robotic mower 10 and define a working range of the robotic mower 10.

Further, the robotic mower 10 includes a housing 11, a signal detection device 12, a mowing mechanism 13, and a walking mechanism 14.

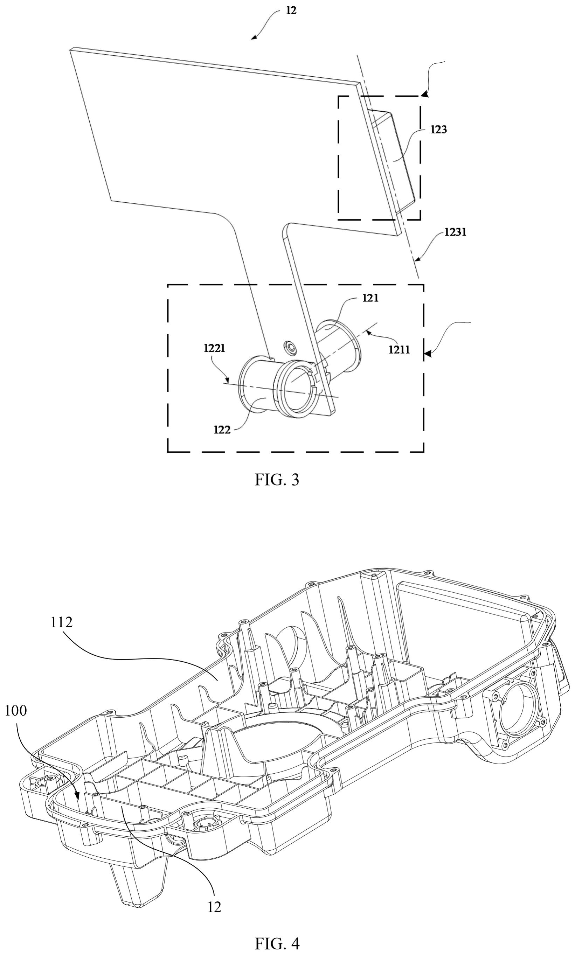

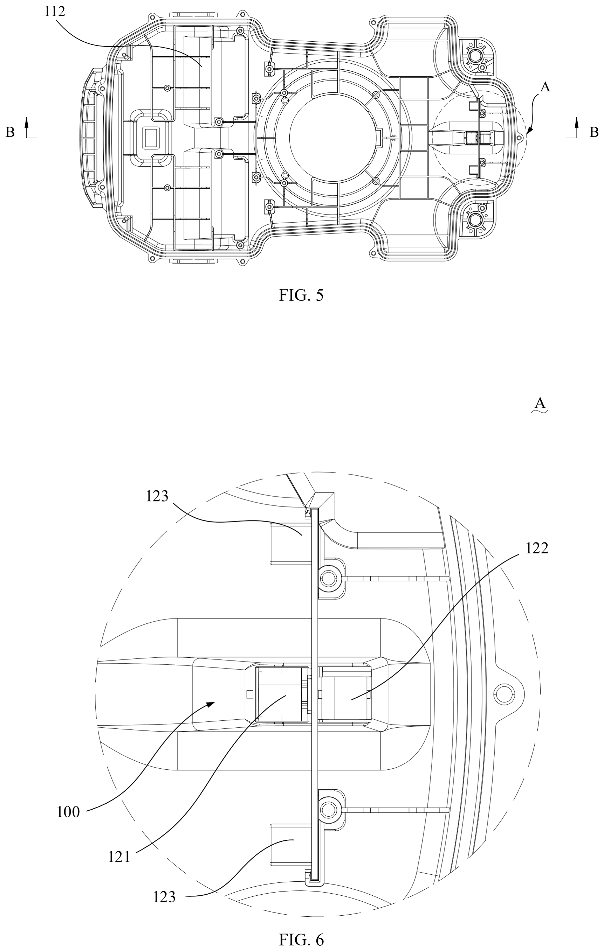

Referring to FIG. 4 to FIG. 8, the housing 11 is provided with an accommodating cavity 100. The signal detection device 12 is accommodated in the accommodating cavity 100. The mowing mechanism 13 is fixed to the housing 11. The walking mechanism 14 is fixed to the housing 11.

The robotic mower 10 can move within the working range defined by the wire 30, for example, autonomously move along the wire 30 by the walking mechanism 14, and mow herbaceous plants on the traveling route by the mowing mechanism 13, to autonomously move and perform a mowing task within a preset area.

Based on the above structure, an embodiment of the present disclosure provides a positioning sensing mechanism. The positioning sensing mechanism 1 is arranged on a robotic mower 10.

The positioning sensing mechanism 1 provided by the embodiment of the present disclosure will be described with reference to FIG. 3.

The positioning sensing mechanism 1 includes a first positioning sensing assembly 121 and a second positioning sensing assembly 122.

The first positioning sensing assembly 121 has a first sensitive axis 1211. The second positioning sensing assembly 122 has a second sensitive axis 1221.

The positioning sensing mechanism 1 determines a location of the robotic mower 10 on a wire 30 based on a positioning signal propagating along the first sensitive axis 1211 and/or a positioning signal propagating along the second sensitive axis 1221.

The wire 30 is configured to define a working range of the robotic mower 10.

A positioning signal is a signal for positioning the robotic mower 10. The type of the positioning signal is not particularly limited in this embodiment.

A sensitive axis is a measurement or sensing axis of a positioning sensing assembly. A positioning sensing assembly has one or more sensitive axes for measuring the position, orientation, or pose of an object. These sensitive axes may be physical axes of the positioning sensing assembly or axes related to the measurement principle or mode of operation of the positioning sensing assembly.

For example, the positioning sensing assembly may be an inductance coil, and the sensing axis may be a central axis of the inductance coil or a line parallel to the central axis of the inductance coil.

For another example, the positioning sensing assembly may be a laser rangefinder, and the sensitive axis may be a direction of propagation of a light beam.

For another example, the positioning sensing assembly may be a tactile sensor, and the sensitive axis is generally an axis associated with contact force, pressure, or deformation for sensing the position and shape of an object.

Based on different positioning sensors, corresponding positioning signals can be obtained for determining the location of the robotic mower 10.

The wire 30 may be a metal wire, an electric wire, or a guide wire, and is intended to be capable of transmitting signals. The wire 30 is not particularly limited in this embodiment.

A working area of the robotic mower 10 is defined through the arrangement of the wire 30. For ease of understanding, for example, the robotic mower 10 uses the wire 30 as a boundary line, and mows an area located on one side of the wire 30. In another embodiment, a circular or rectangular closed area is defined by connecting two ends of the wire 30. The robotic mower 10 works in the area defined by the wire 30. Of course, the area defined by the wire 30 may also be in other shapes, which is not particularly limited in this embodiment.

The process of acquiring the positioning signals is described using an example where the positioning sensing assembly is an inductance coil and the sensitive axis is a central axis of the inductance coil.

In this case, the wire 30 may be directly configured for signal transmission, or a signal transmission line may be additionally provided along the wire 30 for signal transmission.

As such, a signal transmitted on the wire 30 or the signal transmission line generates a first magnetic field around the wire 30 or the signal transmission line, and the first positioning sensing assembly 121 senses the first magnetic field to obtain a first positioning signal. Similarly, the second positioning signal transmitted on the wire 30 or the signal transmission line generates a second magnetic field around the wire 30 or the signal transmission line, and the second positioning sensing assembly 122 senses the second magnetic field to obtain the second positioning signal. As such, the acquisition of the positioning signals is realized.

Further, when the robotic mower 10 travels on the wire 30, the location of the robotic mower 10 on the wire 30 may be determined by calculating the length of a distance on the wire 30 that the robotic mower 10 has traveled, or by calculating the length of a distance on the wire 30 that the robotic mower 10 has not traveled, or by calculating both the length of the distance on the wire 30 that the robotic mower 10 has traveled and the length of the distance on the wire 30 that the robotic mower 10 has not traveled.

In determining the location of the robotic mower 10 on the wire 30, the positioning sensing mechanism 1 receives positioning signals propagating along different sensitive axes, and acquires a transmission duration or phase of either or both of the two positioning signals from sending moment to reception moment, to determine a current location of the robotic mower.

After the positioning signal(s) is/are acquired, signal analysis and signal transmission calculation may be performed based on signal characteristics of the positioning signal(s), such as signal transmission speed, signal transmission duration, signal transmission frequency, signal transmission phase, etc., to determine the location of the robotic mower 10 on the wire 30.

When the location of the robotic mower 10 on the wire 30 is determined based on the positioning signal(s), the positioning may be performed by detecting the positioning signal propagating along the first sensitive axis 1211 by the first positioning sensing assembly 121, or by detecting the positioning signal propagating along the second sensitive axis 1221 by the second positioning sensing assembly 122, or by detecting the positioning signal propagating along the first sensitive axis 1211 by the first positioning sensing assembly 121 and detecting the positioning signal propagating along the second sensitive axis 1221 by the second positioning sensing assembly 122.

The positioning signal is obtained by sensing the signal transmitted in the wire 30 or the signal transmission line. Correspondingly, a signal transmitted in the wire 30 or the signal transmission line is referred to as a sensing signal in embodiments of the present disclosure.

When the first positioning sensing assembly 121 detects a sensing signal, the first positioning sensing assembly 121 obtains a corresponding positioning signal propagating along the first sensitive axis 1211. When the second positioning sensing assembly 122 detects a sensing signal, the second positioning sensing assembly 122 obtains a corresponding positioning signal propagating along the second sensitive axis 1221.

A transmission source direction of the sensing signal may be from a first end and/or a second end on the wire 30 or the signal transmission line. As such, the length of the distance on the wire 30 that the robotic mower 10 has traveled and/or the length of the distance on the wire 30 that the robotic mower 10 has not traveled can be calculated, so as to determine the location.

When the first positioning sensing assembly 121 detects a sensing signal from the first end and/or the second end, the first positioning sensing assembly 121 can obtain a corresponding positioning signal. Based on the positioning signal, a transmission duration or phase of the positioning signal on the wire 30 or the signal transmission line is calculated, to determine the length of the distance on the wire 30 that the robotic mower 10 has traveled, and/or calculate the length of the distance on the wire 30 that the robotic mower 10 has not traveled. The location of the robotic mower 10 on the wire 30 is determined according to the distance between the robotic mower 10 and a single end or the distances between the robotic mower 10 and the two ends.

When the second positioning sensing assembly 122 detects any sensing signal from the first end and/or the second end, the second positioning sensing assembly 122 can also obtain a corresponding positioning signal. Based on a positioning signal, a transmission duration or phase of the positioning signal on the wire 30 or the signal transmission line is calculated, to determine the length of the distance on the wire 30 that the robotic mower 10 has traveled, and/or calculate the length of the distance on the wire 30 that the robotic mower 10 has not traveled. The location of the robotic mower 10 on the wire 30 is determined according to the distance between the robotic mower 10 and a single end or the distances between the robotic mower 10 and the two ends.

In addition, the acquired positioning signal propagating along the first sensitive axis 1211 and the acquired positioning signal propagating along the second sensitive axis 1221 may be used together to determine the location.

In this case, the direction of the first sensitive axis 1211 of the first positioning sensing assembly 121 is the same as the direction of the second sensitive axis 1221 of the second positioning sensing assembly 122. The length of the distance on the wire 30 that the robotic mower 10 has traveled and/or the length of the distance on the wire 30 that the robotic mower 10 has not traveled are respectively determined based on the positioning signals detected by the two positioning sensing assemblies. After cross-verifying the calculated data, the location of the robotic mower 10 on the wire 30 is determined according to the distance between the robotic mower 10 and a single end or the distances between the robotic mower 10 and the two ends.

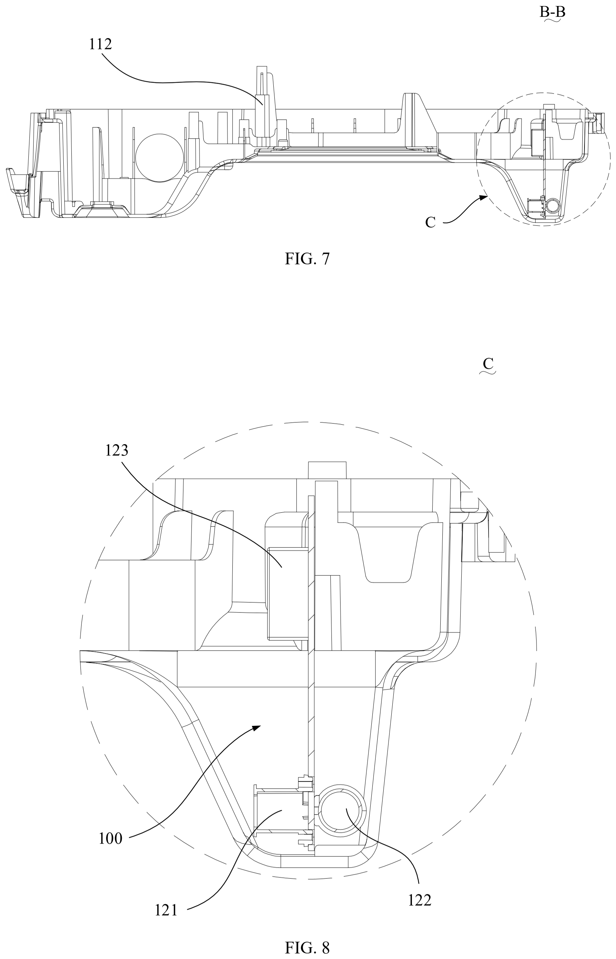

In an embodiment, as shown in FIG. 3 and FIG. 8, the first positioning sensing assembly 121 includes a first sensing coil. The second positioning sensing assembly 122 includes a second sensing coil. The first sensing coil and the second sensing coil determine whether a positioning signal is received by sensing a magnetic field signal, and acquires a transmission duration of the positioning signal from sending to reception.

Particularly, the sensing signal is transmitted along the wire 30 from an end of the wire 30. To determine the location of the robotic mower 10 on the wire 30, the length of the wire 30 between the end of the wire 30 and the robotic mower 10 may be acquired according to transmission speeds, transmission duration, transmission phases, etc., of sensing signals in different transmission source directions in the wire 30, and then the location of the robotic mower 10 on the wire 30 may be determined.

Based on the positioning sensing mechanism 1, a plurality of positioning sensing assemblies each having a sensitive axis are introduced, and the location of the robotic mower 10 on the wire 30 is determined based on detected positioning signals propagating along the sensitive axes, such that the positioning sensing mechanism 1 has excellent performance in determining a boundary location, thereby achieving effective positioning of the robotic mower 10 in the working area.

Referring to FIG. 3, FIG. 6, and FIG. 8, in some optional implementations, the first positioning sensing assembly 121 and the second positioning sensing assembly 122 are arranged on a central axis of the robotic mower 10.

As such, the sensitive axes of the positioning sensing assemblies and the central axis of the robotic mower 10 have a positional correlation in terms of axis arrangement, to avoid deviations in positioning information of acquired positioning signals propagating along different sensitive axes, thereby improving the stability of acquisition of the positioning signal.

In some optional implementations, an angle between the second sensitive axis 1221 and the first sensitive axis 1211 is not zero, to ensure that the robotic mower 10 has a good positioning signal detection effect while moving normally along the wire 30 or moving with angle adjustment.

For example, the robotic mower 10 has a first direction when normally moving along the wire 30, and one of the first sensitive axis 1211 and the second sensitive axis 1221 may be set to be consistent with the first direction, such that the positioning signal can be effectively received in this working scenario. The other axis is set to face another direction forming a non-zero angle with the first direction, to ensure that the positioning signal can be effectively received when the robotic mower 10 turns or rotates on the wire 30 or in other working scenarios involving direction and angle adjustment. As such, the positioning of the robotic mower 10 can be effectively achieved.

Particularly, the first sensitive axis 1211 and the second sensitive axis 1221 are perpendicular to each other. As such, the angle between the positioning signal detection directions of the positioning sensing mechanism 1 is as large as possible, to ensure a good positioning signal detection effect when the robotic mower 10 moves along the wire 30 or moves at an angle with the wire 30.

In some other optional implementations, the first sensitive axis 1211 and the second sensitive axis 1221 are parallel to each other.

The first positioning sensing assembly 121 may be arranged on a front side of the robotic mower 10 in its traveling direction, and the second positioning sensing assembly 122 may be arranged on a rear side of the robotic mower 10 in its traveling direction. Alternatively, the first positioning sensing assembly 121 may be arranged on the rear side of the robotic mower 10 in its traveling direction, and the second positioning sensing assembly 122 may be arranged on the front side of the robotic mower 10 in its traveling direction.

With this structure, the two sensitive axes are set to be spatially parallel to each other, and the positioning signals propagating along the two sensitive axes can be mutually calibrated and verified, thereby ensuring the positioning accuracy of the robotic mower 10.

As shown in FIG. 3, an embodiment of the present disclosure provides a signal detection device. The signal detection device 12 includes:

a boundary sensing mechanism 2 and the positioning sensing mechanism 1 described above.

The boundary sensing mechanism 2 includes a plurality of boundary sensing assemblies 123. Optionally, the positioning sensing mechanism 1 is arranged between/among the plurality of boundary sensing assemblies 123.

The boundary sensing assembly 123 is configured to detect a boundary location, to guide the robotic mower 10 to move along the wire 30. In some cases, the boundary location may be equivalent to a location of the wire 30, or a location within a reasonable distance deviation from the routing of the wire 30.

The boundary sensing assembly 123 includes a third sensing coil. Similarly, the third sensing coil may sense the signal transmitted in the wire 30 or the signal transmission line to obtain a boundary signal, to guide the robotic mower 10 to move along the wire 30.

The positioning sensing mechanism 1 is arranged between/among the plurality of boundary sensing assemblies 123, such that the boundary sensing assembly 123 can be used to determine according to the strength and direction of the boundary signal whether the robotic mower 10 moves along the boundary 30, and when it is determined that the robotic mower 10 moves along the wire 30, the positioning sensing mechanism 1 can be used to accurately determine the location of the robotic mower 10 on the wire 30.

As such, the boundary sensing mechanism 2 and the positioning sensing mechanism 1 are both arranged in the signal detection device 12, the positioning signal and the boundary signal are respectively acquired by the boundary sensing mechanism 2 and the positioning sensing mechanism 1, and with the configuration integrating the two types of sensors, the location of the robotic mower 10 when working in the boundary area can be effectively determined based on the two types of signals.

In some optional implementations, the boundary sensing assembly 123 has a third sensitive axis 1231 and is configured to detect a boundary signal propagating along the third sensitive axis 1231, and the third sensitive axes 1231 of the plurality of the boundary sensing assemblies 123 are parallel to each other.

The boundary signal is a signal for indicating a boundary to the robotic mower 10. The type of the boundary signal is not particularly limited in this embodiment.

Similar to the positioning sensing assembly, the boundary sensing assembly 123 may be an inductance coil, and the sensing axis may be a central axis of the inductance coil or a line parallel to the central axis of the inductance coil.

For another example, the boundary sensing assembly 123 is a laser sensor, and the sensitive axis may be a direction of propagation of a light beam.

Based on the plurality of boundary sensing assemblies 123, a plurality of boundary signals can be acquired for determining the boundary during the movement of the robotic mower 10, to guide the robotic mower 10 to move along the wire 30.

When the wire 30 or the signal transmission line is used for signal transmission, a sensing signal transmitted on the wire 30 or the signal transmission line generates a third magnetic field around the wire, and the boundary sensing assembly 123 senses the third magnetic field to obtain a boundary signal. As such, the acquisition of the boundary signal is achieved.

In a specific implementation process, the sensing signal is transmitted along the wire 30 from an end of the wire 30. The robotic mower 10 on the wire 30 senses the sensing signal through the boundary sensing assembly 123 to obtain the boundary signal to guide the robotic mower 10 to move along the wire 30.

With this structure, the sensitive axes of the plurality of boundary sensing assemblies 123 are set to be spatially parallel to each other, the positioning signals propagating along the plurality of sensitive axes can be mutually calibrated and verified, such that effective movement detection and control can be implemented on the robotic mower 10 during working in the boundary area.

Further, as shown in FIG. 3, the direction of the third sensitive axis 1231 is a vertical direction. The first sensitive axis 1211 is perpendicular to the third sensitive axis 1231, and the second sensitive axis 1221 is also perpendicular to the third sensitive axis 1231. The first positioning sensing assembly 121 and the second positioning sensing assembly 122 are distributed on a central axis of the robotic mower 10.

Then, the robotic mower 10 provided in the embodiments of the present disclosure is described in detail. The robotic mower 10 includes a housing 11, a mowing mechanism 13, a walking mechanism 14, and the signal detection device 12 described above.

The housing 11 is provided with an accommodating cavity 100, and the signal detection device 12 is accommodated in the accommodating cavity 100. The mowing mechanism 13 is fixed to the housing 11, and the walking mechanism 14 is fixed to the housing 11.

With the introduction of the signal detection device 12 into the robotic mower 10, the plurality of positioning sensing assemblies each having a sensitive axis in the signal detection device 12 can be used to effectively determine the location of the robotic mower 10 in the working area based on the positioning signals propagating along the sensitive axes.

In one example, referring to FIG. 2 and FIG. 4 to FIG. 8, the housing 11 includes an upper cover 111 and a bottom shell 112 detachably connected to the upper cover 111. The accommodating cavity 100 is formed in the bottom shell 112.

The signal detection device 12 is accommodated in the accommodating cavity 100, to prevent the signal detection device 12 from being impacted by an object during working of the robotic mower 10, and ensure that the signal detection device 12 is in a stable working environment, thereby ensuring the stability of operation of the signal detection device 12.

In some optional implementations, referring to FIG. 2, FIG. 4, FIG. 7, and FIG. 8, a bottom of the accommodating cavity 100 is not lower than a lower edge of the housing 11.

In this way, it is possible to prevent the accommodating cavity 100 from being positioned too low, which could otherwise cause it to become stuck on low obstacles and affect the movement of the robotic mower 10.

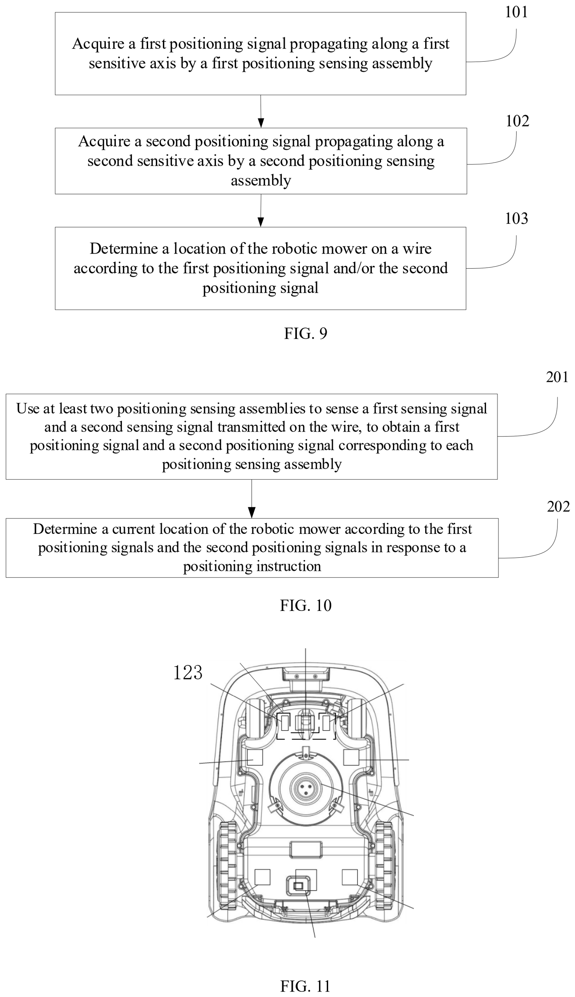

In some optional implementations, as shown in FIG. 2 and FIG. 11, the mowing mechanism 13 further includes a cutter head assembly 9. The cutter head assembly 9 is driven to rotate to prune herbaceous plants on the traveling route of the robotic mower 10.

The bottom of the accommodating cavity 100 is not lower than the lowest position of the cutter head assembly 9, so as to prevent the accommodating cavity 100 from pressing down the herbaceous plants.

In an implementation, as shown in FIG. 11, a distance between the first positioning sensing assembly 121 and the second positioning sensing assembly 122 is greater than a diameter of the cutter head assembly 9 of the mowing module. As such, a longer signal segment can be provided, thereby increasing the positioning accuracy.

Further, the mowing mechanism 13 includes a lifting assembly configured to drive the cutter head assembly 9 to ascend or descend to change a height by which the herbaceous plants are to be pruned.

In some optional implementations, the signal detection device 12 is located in the middle of the walking mechanism 14.

In one example, referring to FIG. 2 and FIG. 3, and the walking mechanism 14 includes a driving wheel 141 and a driven wheel 142. The driving wheel 141 and the driven wheel 142 are both arranged on the bottom shell 112, and support the housing 11 above the ground. The driving wheel 141 is configured to provide power for traveling of the robotic mower 10, and the driven wheel 142 assists the driving wheel 141 to ensure stable movement of the robotic mower 10.

The driven wheel 142 may be rotatably connected to the bottom shell 112, and the traveling direction of the robotic mower 10 may be adjusted by driving the driven wheel 142 to rotate relative to the bottom shell 112.

The signal detection device 12 is located in the middle of the walking mechanism 14 to ensure that the signal detection device 12 is centrally located and is thus protected by the walking mechanism 14 from collision.

In some optional implementations, the signal detection device 12 is located on a central axis of the robotic mower 10.

With this structure, the signal detection device 12 is located above the wire 30, and the signal detection device 12 can receive positioning signals and boundary signals with sufficient strength, thereby ensuring the quality of signal detection.

Further, the robotic mowing system provided in the embodiments of the present disclosure is described in detail. The robotic mowing system includes:

a charging station 20, a wire 30, and the robotic mower 10 described above.

The charging station 20 is configured to provide electric energy to the robotic mower 10. The wire 30 is connected to the charging station 20 and is configured to position the robotic mower 10 and define a working range of the robotic mower 10.

As such, with the introduction of the robotic mower 10 of the above embodiments into the robotic mowing system, the plurality of positioning sensing assemblies each having a sensitive axis can be used to acquire positioning signals propagating along the sensitive axes, so as to effectively determine the location of the robotic mower 10 in the working area.

In some optional implementations, the charging station 20 includes a signal generation device electrically connected to the wire 30 and configured to alternately send a positioning signal of a first frequency and a boundary signal of a second frequency to the wire 30.

The signal generation device sends the positioning signal and the boundary signal to the wire 30, such that sensing signals respectively corresponding to the positioning signal and the boundary signal are injected into the wire 30. In this case, the moment at which the positioning signal or the boundary signal is sent to the wire 30 is an injection moment (sending moment) of the sensing signal corresponding to the positioning signal or the boundary signal.

The signal detection device 12 senses different sensing signals to obtain corresponding positioning signals and boundary signals, so as to determine the location of the robotic mower 10 on the wire 30 and determine the working range of the robotic mower 10.

In an optional implementation, the signal generation device may be arranged outside the robotic mower 10, optionally arranged on the charging station 20, or may be arranged on the robotic mower 10, to meet various usage requirements. The signal generation device may be wirelessly connected to the wire 30 by wireless transmission without being bound by a wire harness, thereby providing greater convenience in use.

Optionally, the wire 30 may be arranged at a boundary of a preset area, and may be a metal wire, a non-metal guide line, a cable having an insulating layer, etc.

For ease of understanding, in an application scenario, both ends of the wire 30 are connected to the charging station 20, and the charging station 20 includes a signal generation device configured to inject a sensing signal into the wire 30. In another application scenario, both ends of the wire 30 are connected to a charging station 20, and the robotic mower 10 includes a signal generation device configured to inject a sensing signal into the wire 30. The current execution entity can obtain a positioning signal or a boundary signal by sensing a signal transmitted in the wire 30. The mode of generation of the positioning signal in the wire 30 is not particularly limited in this embodiment.

The positioning sensing assemblies are arranged on the robotic mower 10. In an embodiment, the positioning sensing assembly is an inductance coil. The sensitive axis of the positioning sensing assembly is parallel to a center line of the inductance coil. When the signal generation device sends a positioning signal to the wire 30, i.e., when a sensing signal is injected into the wire 30 and the positioning sensing assembly detects the sensing signal in the wire 30, the current execution entity obtains the positioning signal. Similarly, the boundary sensing assembly may also be an inductance coil. The principle of sensing a boundary signal by the boundary sensing assembly is the same as the principle of sensing a positioning signal by the positioning sensing assembly, so the details will not be repeated herein.

According to the above system structure, the signal generation device sends the positioning signal and the boundary signal at preset frequencies to the wire 30 that defines the working range of the robotic mower 10. As such, the positioning signal and the boundary signal are generated in a controllable manner, and effective detection and distinguishing of the positioning signal and the boundary signal can be ensured.

In some optional implementations, the charging station 20 includes a signal generation device.

The signal generation device is connected to two ends of the wire 30, the positioning signal includes a first signal and a second signal.

The signal generation device is configured to send the first signal to a first end of the wire 30, send the second signal to a second end of the wire 30, and send a boundary signal to the first end or the second end.

The first signal and the second signal are both positioning signals.

The signal generation device is connected to the two ends of the wire 30. The signal generation device sends the first signal to the first end of the wire 30, and sends the second signal to the second end of the wire 30. The first signal and the second signal are transmitted from the two ends of the wire 30, i.e., the first signal and the second signal are each transmitted from one end of the wire 30.

The first signal may be the same as or different from the second signal, which is not particularly limited in the embodiments of the present disclosure. The transmission of the first signal and the second signal from the two ends of the wire 30 is conducive to improving the positioning frequency and positioning accuracy, allowing for the correction of the positioning result.

In the above system structure, the number of signal generation devices may be the same as the number of the ends of the wire 30. The signal generation devices are electrically connected to the ends of the wire 30 in one-to-one correspondence, and respectively send signals to the corresponding ends.

Alternatively, one signal generation device is equipped with a plurality of signal output ends, and the signal generation device is connected to the ends of the wire 30 through the different signal output ends.

The signal generation device may send a positioning signal and a boundary signal to the wire 30. The boundary signal may be sent from the first end of the wire 30 or may be sent from the second end of the wire 30.

The connection structure and signal transmission mode between the signal generation device and the wire 30 can effectively use the ends of the wire 30 for signal transmission, thereby improving the data transmission efficiency to meet practical application requirements.

In some optional implementations, the first signal and the second signal are signals of the same type, to facilitate unified identification of positioning signals, create consistency conditions for signal identification and signal processing, ensure data standardization, improve the data processing efficiency, and improve the positioning accuracy.

Optionally, in some embodiments, the first signal and the second signal may also be of different types to meet application requirements in different scenarios.

In some optional implementations, there is a first time interval between the first signal and the second signal.

The time interval between the first signal and the second signal may be a time interval between moments at which the signals are sent or a time interval between moments at which the signals are detected.

Th first time interval is, for example, not less than 8 μs. For example, in an application scenario, the first signal and the second signal both last for 8 μs, and the time interval is 8 μs.

The time interval between the first signal and the second signal may be longer or shorter, which is not particularly limited in this embodiment.

In this way, the first signal and the second signal are transmitted at an interval, and an appropriate time interval is set between different positioning signals, to ensure that the positioning signals do not interfere with each other, thereby ensuring the signal detection accuracy and the transmission quality.

In some optional implementations, there is a second time interval between the positioning signal and the boundary signal.

When a plurality of signals are included in the positioning signal, the boundary signal and the positioning signal need to have a second time interval, where the positioning signal is sent at a moment neighboring to the moment at which the boundary signal is sent.

The second time interval is, for example, not less than 200 μs. The time interval between the positioning signal and the boundary signal may be longer or shorter, which is not particularly limited in this embodiment.

In this way, an appropriate time interval is set between the positioning signal and the boundary signal, to ensure that the positioning signal and the boundary signal do not interfere with each other, thereby ensuring the signal detection accuracy and the transmission quality.

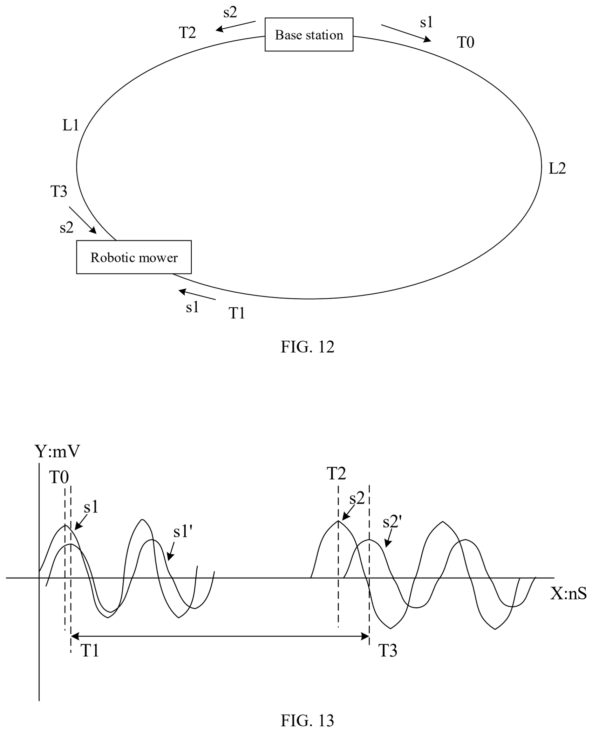

For example, as shown in FIG. 12, it is assumed that a signal generation device is mounted on the base station, a first signal output end of the signal generation device sends a high-frequency first signal to the first end of the wire 30. Then, after an interval of 3 to 10 μs, a second signal output end of the signal generation device sends a high-frequency second signal to the second end of the wire 30. Then, after an interval of 150 to 400 μs, a third signal output end of the signal generation device sends a low-frequency boundary signal to the first end or the second end of the wire 30. As such, the positioning signals and the boundary signal are outputted at suitable frequencies and suitable time intervals. The boundary signal is used for controlling the robotic mower 10 to travel on the wire 30.

It should be noted that the time interval at which the sensing signal and the boundary signal are sent is not limited to the above specific value, and may be set according to actual situations. The first signal output end and the third signal output end may be the same or different ports, and the second signal output end and the third signal output end may be the same or different ports, which is not limited herein.

In some optional implementations, the positioning signal is a sine wave signal or a cosine wave signal, and the boundary signal is a square wave signal.

By configuring the positioning signal and the boundary signal as signals with different waveforms, the positioning signal can be well distinguished from the boundary signal, thereby improving the accuracy of information processing and ensuring the final positioning accuracy.

In some optional implementations, a number of sine waves or cosine waves in a single positioning signal is not less than 8. This ensures that the positioning signal has sufficient periodicity and therefore can be accurately located and measured at a receiving end. Using a multi-periodic signal can reduce the impact from the noises and improve the reliability and accuracy of the signal.

In some optional implementations, a number of square waves in a single boundary signal is not less than 3. This ensures that the boundary signal has sufficient stability and identifiability. A square wave signal has a significant change between high and low levels, which can be used to mark the start and end positions of the signal, thus facilitating signal interception and processing. Using a plurality of square wave periods can reduce the impact from errors and interference and improve the reliability and accuracy of the signal.

Different numbers of waves are set to distinguish the positioning signal from the boundary signal.

Optionally, in some embodiments, the number of waves in a single positioning signal and the number of waves in a single boundary signal may be the same or may be different more significantly. For example, the number of sine waves or cosine waves in a single positioning signal is 10, and the number of square waves in a single boundary signal is 3. This is not particularly limited in this embodiment.

In some optional implementations, a ratio of the first frequency to the second frequency is not less than 5. This ensures that the signals have a significant frequency difference, reduces the overlap and interference between frequencies, and makes the frequency characteristics of the signals clearer and more identifiable, such that accurate frequency analysis and distinguishing can be implemented in the process of signal processing and identification, and the accuracy and reliability of signal processing and identification are improved.

Optionally, in some embodiments, the first frequency and the second frequency may be the same, or the ratio of the first frequency to the second frequency may be smaller, e.g., the value of the ratio is 3. This is not particularly limited in this embodiment.

Corresponding to the above structure embodiments, as shown in FIG. 9, an embodiment of the present disclosure further provides a method for positioning a robotic mower, including the following steps 101 to 103.

At step 101, a first positioning signal propagating along a first sensitive axis is acquired by a first positioning sensing assembly.

The first positioning signal is a signal for positioning the robotic mower. The type of the first positioning signal is not particularly limited in this embodiment.

The first positioning sensing assembly 121 is arranged on the robotic mower 10. Optionally, the first positioning sensing assembly 121 is a first inductance coil.

Correspondingly, the first sensitive axis 1211 is parallel to or coincides with a center line of the first inductance coil, and the current execution entity obtains a first positioning signal when a first sensing signal in a wire 30 or a signal transmission line is detected.

It should be noted that the current execution entity may be a terminal device or a server.

For example, in an application scenario, the current execution entity is a terminal device having a computing function such as a smartphone, a Microcontroller Unit (MCU), or a Central Processing Unit (CPU). In another application scenario, the current execution entity is a server or a server cluster. This is not particularly limited in this embodiment. For example, the current execution entity may be a chip mounted on the robotic mower 10, which moves along with the robotic mower 10, and obtains the first positioning signal by sensing along the first sensitive axis 1211.

For another example, the current execution entity is a server, and the first positioning signal propagating along the first sensitive axis 1211 from the robotic mower 10 is acquired through the first positioning sensing assembly 121 in the server.

This is not particularly limited in this embodiment.

At step 102, a second positioning signal propagating along a second sensitive axis is acquired by a second positioning sensing assembly.

The second positioning signal is a signal for positioning the robotic mower. The type of the second positioning signal is not particularly limited in this embodiment.

The second positioning sensing assembly 122 is arranged on the robotic mower 10. Optionally, the second positioning sensing assembly 122 is a second inductance coil.

Correspondingly, the second sensitive axis 1221 is parallel to or coincides with a center line of the second inductance coil, and the current execution entity obtains a second positioning signal when a second sensing signal in a wire 30 or a signal transmission line is detected.

At step 103, a location of the robotic mower on a wire is determined according to the first positioning signal and/or the second positioning signal.

The wire 30 is configured to define a working range of the robotic mower 10.

A traveling area or a working area of the robotic mower 10 is defined through the arrangement of the wire 30. For ease of understanding, for example, the robotic mower 10 uses the wire 30 as a boundary, and mows an area located on one side of the wire 30. In another embodiment, a circular or rectangular area is defined by connecting two ends of the wire 30. The robotic mower 10 works in the area defined by the wire 30. Of course, the area defined by the wire 30 may also be in other shapes, which will not be particularly limited in this embodiment.

The wire 30 may be a metal wire, an electric wire, or a guide wire, and is intended to be capable of transmitting signals. The wire 30 is not particularly limited in this embodiment.

In a specific implementation process, a first sensing signal and a second sensing signal are transmitted in the wire 30, where the first sensing signal is used for causing the first positioning sensing assembly 121 to obtain a first positioning signal, and the second sensing signal is used for causing the second positioning sensing assembly 122 to obtain a second positioning signal.

Alternatively, a signal transmission line having the same extending direction or trajectory as the wire 30 is provided, and a first sensing signal and a second sensing signal are transmitted through the signal transmission line, where the first sensing signal is used for causing the first positioning sensing assembly 121 to obtain a first positioning signal, and the second sensing signal is used for causing the second positioning sensing assembly 122 to obtain a second positioning signal.

The detection of the positioning signals requires a corresponding signal generation device.

In an application scenario, the signal generation device is arranged outside the robotic mower 10. Both ends of the wire 30 or the signal transmission line are connected to a charging station, and the charging station includes a signal generation device configured to transmit a signal into the wire 30 or the signal transmission line.

In another application scenario, the signal generation device is arranged inside the robotic mower 10. Both ends of the wire 30 or the signal transmission line are connected to a charging station, and the robotic mower 10 includes a signal generation device configured to transmit a signal into the wire 30 or the signal transmission line.

The current execution entity can obtain the first positioning signal or the second positioning signal according to the signal in the wire 30 or the signal transmission line. The mode of generation of the first positioning signal and the second positioning signal in the wire 30 is not particularly limited in this embodiment.

In the subsequent description of embodiments, the process of implementing the method is described in detail using the wire 30 as an example.

After determining the first positioning signal and the second positioning signal, the current execution entity can obtain information such as signal reception moments, frequencies, phases, amplitudes, etc., corresponding to the first positioning signal and the second positioning signal.

The current execution entity may calculate a distance from the robotic mower 10 to the signal generation point according to known information such as sending moments of the first sensing signal and the second sensing signal and transmission speeds of the first sensing signal and the second sensing signal, so as to determine the location of the robotic mower 10 on the wire 30.

The transmission distances of the first sensing signal and the second sensing signal may be transmitted to the current execution entity by the signal generation device or other entity having a communication function, or may be calculated by the current execution entity.

For ease of understanding, for example, in an application scenario, the current execution entity detects the first sensing signal transmitted by the signal generation device (i.e., receives the first positioning signal corresponding to the first sensing signal), and calculates the transmission distance of the first sensing signal according to the sending moment of the first sensing signal, the transmission speed of the first sensing signal, and the sending moment of the first positioning signal. Similarly, the method of calculating the transmission distance of the second sensing signal is the same as that of the first sensing signal, so the details will not be repeated herein.

The transmission distance of the sensing signal may also be calculated using other signal parameters, which is not particularly limited in this embodiment.

After the transmission distances of the sensing signals are determined, the current walking location of the robotic mower 10 on the wire 30 can be determined correspondingly. As such, the determination of the location of the robotic mower 10 can be realized.

Based on the method for positioning a robotic mower, a plurality of positioning sensing assemblies having a sensitive axis are introduced, and the location of the robotic mower 10 on the wire 30 is determined based on positioning signals propagating along the sensitive axes. As such, effective positioning of the robotic mower 10 in the working area is achieved, and the boundary location determining performance is ensured.

In some optional implementations, determining a location of the robotic mower on a wire according to the first positioning signal and/or the second positioning signal in the step 103 includes:
calculating the location of the robotic mower on the wire according to a moment at which the first positioning signal is received, a transmission speed of a first sensing signal in the wire, and a moment at which the first sensing signal is sent, and/or according to a moment at which the second positioning signal is received, a transmission speed of a second sensing signal in the wire, and a moment at which the second sensing signal is sent, where the first positioning signal is determined according to the first sensing signal, and the second positioning signal is determined according to the second sensing signal.

In this process, the location of the robotic mower on the wire is determined according to the moment at which the first positioning signal is received, the transmission distance of the first sensing signal, and the moment at which the first sensing signal is sent.

Alternatively, the location of the robotic mower on the wire is determined according to the moment at which the second positioning signal is received, the transmission distance of the second sensing signal, and the moment at which the second sensing signal is sent.

Alternatively, the location of the robotic mower on the wire is determined according to the moment at which the first positioning signal is received, the transmission distance of the first sensing signal, the moment at which the first sensing signal is sent, the moment at which the second positioning signal is received, the transmission distance of the second sensing signal, and the moment at which the second sensing signal is sent.

In an embodiment, the transmission source direction of the sensing signal corresponding to the first positioning signal propagating along the first sensitive axis 1211 is opposite to the transmission source direction of the sensing signal corresponding to the second positioning signal propagating along the second sensitive axis 1221. Using the wire 30 as an example, a first transmission distance of the first sensing signal corresponding to the first positioning signal from the first end of the wire 30 to the robotic mower 10 may be acquired, and a second transmission distance of the second sensing signal corresponding to the second positioning signal from the second end of the wire 30 to the robotic mower 10 may also be acquired. The sum of the first transmission distance and the second transmission distance equals the total length of the wire 30.

Correspondingly, the location of the robotic mower 10 on the wire 30 is calculated based on the following formulas:

$$L1-L2=[(T3-T2)-(T1-T0)]*V;$$

and

$$L1+L2=L_{TotalLength},$$

, where L1 represents the distance from one end of the wire 30 to the robotic mower 10; L2 represents the distance from the other end of the wire 30 to the robotic mower 10; T2 represents the moment at which the signal generation device injects the first sensing signal into one end of the wire 30; T3 represents the moment at which the first sensing signal reaches the robotic mower 10; T0 represents the moment at which the signal generation device injects the second sensing signal into the other end of the wire 30; T1 represents the moment at which the second sensing signal reaches the robotic mower 10; and $L_{TotalLength}$ represents the total length of the wire 30.

The location of the robotic mower 10 on the wire 30 can be obtained by calculating L1/L2.

It should be noted that the moment at which the first positioning signal is received may be the same as to the moment at which the first sensing signal arrives at the robotic mower, i.e., may be T3 or T1, and the moment at which the second positioning signal is received may be the same as to the moment at which the second sensing signal arrives at the robotic mower, i.e., may be T3 or T1.

In an embodiment, the first sensing signal in the wire 30 is inputted from one end of the wire 30, passes through the robotic mower 10, and reaches the other end of the wire 30. In this case, only T2 and T3 can be obtained.

In another embodiment, signals in the wire 30 include a first sensing signal and a second sensing signal respectively inputted from the two ends of the wire 30, and the first sensing signal and the second sensing signal are transmitted in opposite directions in the wire 30. In this case, T0, T1, T2, and T3 can be obtained, which is conducive to improving the positioning frequency and positioning accuracy, allowing for the correction of the positioning result.

According to the above embodiments, the location of the robotic mower 10 on the wire 30 is calculated according to the related information of the signals, and is not likely to be erroneous, such that the positioning accuracy is ensured. In addition, the investment of unnecessary hardware equipment can be reduced, thereby reducing the costs of positioning the robotic mower 10.

In some optional implementations, determining a location of the robotic mower on a wire according to the first positioning signal and/or the second positioning signal in the step 103 includes:

when the robotic mower travels on the wire, acquiring the first positioning signal by the first positioning sensing assembly to determine the location of the robotic mower on the wire; and

when an angle between a central axis of the robotic mower and the wire is not less than a first preset value, acquiring the second positioning signal by the second positioning sensing assembly or acquiring the first positioning signal and the second positioning signal by the first positioning sensing assembly and the second positioning sensing assembly to determine the location of the robotic mower on the wire.

When the angle between the central axis of the robotic mower 10 and the wire 30 is not less than the first preset value, it may be determined that the robotic mower 10 turns, rotates, or otherwise moves with direction and angle adjustment on the wire 30. This process is an application processing process regarding how to determine the location of the robotic mower 10 on the wire 30.

When the robotic mower 10 travels on the wire 30, the first positioning signal is acquired by the first positioning sensing assembly 121 to determine the location of the robotic mower 10 on the wire 30.

When the angle between the central axis of the robotic mower 10 and the wire 30 is not less than the first preset value, it may be determined that the robotic mower 10 does not normally travel on the wire 30, and it is necessary to acquire the second positioning signal by the second positioning sensing assembly 122 to determine the location of the robotic mower 10 on the wire 30. Alternatively, it is necessary to acquire the first positioning signal and the second positioning signal respectively by the first positioning sensing assembly 121 and the second positioning sensing assembly 122 to determine the location of the robotic mower 10 on the wire 30.

The first preset value is, for example, 5°.

In the process of acquiring a positioning signal by the second positioning sensing assembly 122 to determine the location of the robotic mower 10 on the wire 30 or acquiring positioning signals by the first positioning sensing assembly 121 and the second positioning sensing assembly 122 to determine the location of the robotic mower 10 on the wire 30, the distance from one end of the wire 30 to the robotic mower 10 and the distance from the other end of the wire 30 to the robotic mower 10 may be obtained according to the moment at which the signal generation device injects the first sensing signal into the wire 30, the moment at which the first sensing signal reaches the robotic mower 10, the moment at which the signal generation device injects the second sensing signal into the other end of the wire 30, the moment at which the second sensing signal reaches the robotic mower 10, the transmission speed of the sensing signals on the wire 30, and the total length of the wire 30. As such, the location of the robotic mower 10 on the wire 30 can be determined based on the positioning signals.

In this process, depending on different working modes, different positioning signals are selectively used to determine the location of the robotic mower 10 on the wire 30, to achieve the accurate positioning of the robotic mower 10 in different working modes.

In some optional implementations, before acquiring the second positioning signal by the second positioning sensing assembly or acquiring the first positioning signal and the second positioning signal by the first positioning sensing assembly and the second positioning sensing assembly to determine the location of the robotic mower on the wire, the method further includes:

determining a distance between the robotic mower and the wire; and

when the distance is not greater than a second preset value, executing the step of acquiring the second positioning signal by the second positioning sensing assembly or acquiring the first positioning signal and the second positioning signal by the first positioning sensing assembly and the second positioning sensing assembly to determine the location of the robotic mower on the wire.

The second preset value is, for example, less than or equal to 15 cm.

As such, the distance between the robotic mower 10 and the wire 30 is used as a prerequisite for performing the positioning of the robotic mower 10, to ensure that the robotic mower 10 is close to the wire 30 at a short distance falling within an effective distance range, thereby ensuring the accuracy and effectiveness of the finally determined location of the robotic mower 10 on the wire 30.

In some optional implementations, referring to FIG. 10, when the first sensitive axis 1211 is parallel to the second sensitive axis 1221, the method further includes the following steps 201 and 202.

At step 201, at least two positioning sensing assemblies are used to sense a first sensing signal and a second sensing signal transmitted on the wire, to obtain a first positioning signal and a second positioning signal corresponding to each positioning sensing assembly.

The at least two positioning sensing assemblies include a first positioning sensing assembly 121 and a second positioning sensing assembly 122 arranged on the robotic mower 10 at a front side and a rear side of the robotic mower respectively.

At step 202, a current location of the robotic mower is determined according to the first positioning signal and the second positioning signal in response to a positioning instruction.

It should be noted that the first sensing signal transmitted on the wire 30 generates a first magnetic field around the wire 30, and the first positioning sensing assembly 121 senses the first magnetic field to obtain a first positioning signal. Similarly, the second sensing signal transmitted on the wire 30 generates a second magnetic field around the wire 30, and the second positioning sensing assembly 122 senses the second magnetic field to obtain a second positioning signal.

The transmission direction of the first sensing signal is opposite to that of the second sensing signal. The first sensing signal is a signal transmitted from the first end to the second end of the wire 30, and the second sensing signal is a signal transmitted from the second end to the first end of the wire 30. Alternatively, the first sensing signal is a signal transmitted from the second end to the first end of the wire 30, and the second sensing signal is a signal transmitted from the first end to the second end of the wire 30.

For example, referring to FIG. 11, the first positioning sensing assembly 121 and the second positioning sensing assembly 122 are arranged on the robotic mower 10 at a front side and a rear side of the robotic mower respectively. Particularly, the first positioning sensing assembly 121 and the second positioning sensing assembly 122 are mounted on the central axis of the robotic mower 10 and are respectively located at a front end and a rear end of a base plate of the robotic mower 10. The robotic mower 10 travels along the wire 30. During the traveling process, the first positioning sensing assembly 121 and the second positioning sensing assembly 122 are respectively located at different locations on the wire 30, i.e., a first location and a second location. Therefore, the first positioning sensing assembly 121 and the second positioning sensing assembly 122 respectively sense the first sensing signal and the second sensing signal at the first location and the second location, to obtain the corresponding first positioning signal and second positioning signal, so as to calculate the current location of the robotic mower 10.

Compared with the related art, in the embodiments of the present disclosure, the first positioning sensing assembly 121 and the second positioning sensing assembly 122 are respectively used to sense the first sensing signal and the second sensing signal transmitted on the wire 30. Provided that the distance by which the robotic mower 10 walks along the wire 30 is constant, the length of positioning data obtained by the scheme of the present disclosure is twice the length of positioning data obtained by using one positioning sensing assembly. In other words, the scheme of the present disclosure provides longer positioning data, thereby further improving the positioning accuracy and meeting the requirements of scenarios requiring high positioning accuracy.

In some optional implementations, determining a current location of the robotic mower according to the first positioning signal and the second positioning signal in response to a positioning instruction includes:

in a process of the robotic mower traveling along the wire, in response to the positioning instruction, calculating a location point of the first positioning sensing assembly on the wire as a third wire location point according to the first positioning signal and the second positioning signal acquired by the first positioning sensing assembly, and acquiring a location of the robotic mower in a working area as third relative positioning data by using a positioning sensing mechanism;

in response to the positioning instruction, calculating a location point of the second positioning sensing assembly on the wire as a fourth wire location point according to the first positioning signal and the second positioning signal acquired by the second positioning sensing assembly, and acquiring a location of the robotic mower in the working area as fourth relative positioning data by using the positioning sensing mechanism; and

determining the current location of the robotic mower in the working area according to the third wire location point, the third relative positioning data, the fourth wire location point, and the fourth relative positioning data and based on a first mapping relationship and a second mapping relationship which are preset.

The first mapping relationship is a mapping relationship between a first wire location point associated with the first positioning sensing assembly 121 and first relative positioning data, and the second mapping relationship is a mapping relationship between a second wire location point associated with the second positioning sensing assembly 122 and second relative positioning data.

In the above process, the current location of the robotic mower 10 in the working area can be quickly determined by respectively comparing the location points on the wire that are detected by the two positioning sensing assemblies and the relative positioning data detected by the positioning sensing mechanism 1 with the preset mapping relationships.

In some optional implementations, the first mapping relationship and the second mapping relationship may be constructed based on historical data, or may be obtained by an artificial intelligence model through learning based on sample data.

In some other optional implementations, the first mapping relationship and the second mapping relationship may be obtained in the following manner:

in response to a wire-following map building instruction, entering a wire-following map building mode and controlling the robotic mower to travel one lap along the wire;
in the process of the robotic mower travelling one lap along the wire, using the first positioning sensing assembly to determine a plurality of location points of the first positioning sensing assembly on the wire as first wire location points, using the positioning sensing mechanism to acquire the location of the robotic mower in the working area as the first relative positioning data, and constructing the first mapping relationship between the first wire location points and the first relative positioning data; and
in the process of the robotic mower travelling one lap along the wire, using the second positioning sensing assembly to determine a plurality of location points of the second positioning sensing assembly on the wire as second wire location points, using the positioning sensing mechanism to acquire the location of the robotic mower in the working area as the second relative positioning data, and constructing the second mapping relationship between the second wire location points and the second relative positioning data.

In practical applications, a policy of updating the first mapping relationship and the second mapping relationship needs to be determined based on the degree of change of the application scenario of the robotic mower 10. In some application scenarios that change greatly, the robotic mower 10 needs to update the first mapping relationship and the second mapping relationship before each working task, while in application scenarios with little change, the generated first mapping relationship and second mapping relationship can be reused and may be updated regularly or irregularly.

In the above implementation process, the positioning sensing mechanism is used to detect a plurality of pieces of relative positioning data within a preset travelling distance, to avoid the problem of inaccurate positioning caused by an instantaneous error. The currently detected location points on the wire are compared with the corresponding wire location points configured in advance, and the data corresponding to the wire location point with the smallest deviation is selected. As such, accurate relative positioning data can be found, thereby realizing the accurate positioning of the robotic mower 10.

For example, a process of generating and using the first mapping relationship and the second mapping relationship is as follows.

After the robotic mower 10 is started from a start point, the robotic mower 10 is controlled to enter a wire-following map building mode. In this mode, the robotic mower 10 is controlled to travel one lap along the wire 30. In the process of the robotic mower 10 travelling one lap along the wire 30, the following steps are performed.

In one step, the first positioning sensing assembly 121 is used to acquire a plurality of location points of the first positioning sensing assembly 121 on the wire 30 (first wire location points), the positioning sensing mechanism 1 is used to acquire the location of the robotic mower 10 in the working area (first relative positioning data), and a mapping relationship between the location of the robotic mower 10 on the wire 30 and the relative positioning data, i.e., the first mapping relationship, is established in a rectangular coordinate system (where the vertical axis represents the location of the robotic mower 10 on the wire 30, and the horizontal axis represents the relative positioning data).

In another step, the second positioning sensing assembly 122 is used to acquire a plurality of location points of the second positioning sensing assembly 122 on the wire 30 (second wire location points), the positioning sensing mechanism 1 is used to acquire the location of the robotic mower 10 in the working area (second relative positioning data), and a mapping relationship between the location of the robotic mower 10 on the wire 30 and the relative positioning data, i.e., the second mapping relationship, is established in a rectangular coordinate system (where the vertical axis represents the location of the robotic mower 10 on the wire 30, and the horizontal axis represents the relative positioning data).

In the process of the robotic mower 10 traveling again along the wire 30 for a preset traveling distance, the following steps are performed.

In still another step, the first positioning sensing assembly 121 is used to acquire a plurality of location points of the first positioning sensing assembly 121 on the wire 30 (third wire location points); the positioning sensing mechanism 1 is used to acquire the location of the robotic mower 10 in the working area (third relative positioning data), and a mapping relationship between the location of the robotic mower 10 on the wire 30 and the relative positioning data, i.e., the third mapping relationship, is established in a rectangular coordinate system (where the vertical axis represents the location of the robotic mower 10 on the wire 30, and the horizontal axis represents the relative positioning data).

In yet another step, the second positioning sensing assembly 122 is used to acquire a plurality of location points of the second positioning sensing assembly 122 on the wire 30 (fourth wire location points), the positioning sensing mechanism 1 is used to acquire the location of the robotic mower 10 in the working area (fourth relative positioning data), and a mapping relationship between the location of the robotic mower 10 on the wire 30 and the relative positioning data, i.e., the fourth mapping relationship, is established in a rectangular coordinate system (where the vertical axis represents the location of the robotic mower 10 on the wire 30, and the horizontal axis represents the relative positioning data).

Method of acquiring the location of the robotic mower 10 in the working area is as follows.

A difference between the vertical axis of the first mapping relationship and the vertical axis of the third mapping relationship and a difference between the vertical axis of the second mapping relationship and the vertical axis of the fourth mapping relationship need to be calculated, and when the sum of the two differences (or of the squares of the differences) reaches a minimum value, the location of the robotic mower 10 on the wire 30 is used as relative positioning data. The location of the robotic mower 10 in the working area is calculated according to the relative positioning data and data detected by an inertial sensor.

In other words, determining a current location of the robotic mower according to the first positioning signal and the second positioning signal in response to a positioning instruction includes:

acquiring a first mapping relationship and a second mapping relationship, where the first mapping relationship is a mapping relationship between a first wire location point associated with the first positioning sensing assembly and first relative positioning data, and the second mapping relationship is a mapping relationship between a second wire location point associated with the second positioning sensing assembly and second relative positioning data;

in a process of the robotic mower traveling along the wire, in response to the positioning instruction, calculating a plurality of location points of the first positioning sensing assembly on the wire as third wire location points according to the first positioning signal and the second positioning signal acquired by the first positioning sensing assembly within a preset traveling distance, acquiring a location of the robotic mower in a working area as third relative positioning data by using a positioning sensing mechanism, and constructing a third mapping relationship between the third wire location points and the third relative positioning data;

in response to the positioning instruction, calculating a plurality of location points of the second positioning sensing assembly on the wire as fourth wire location points according to the first positioning signal and the second positioning signal acquired by the second positioning sensing assembly within a preset traveling distance, acquiring a location of the robotic mower in a working area as fourth relative positioning data by using the positioning sensing mechanism, and constructing a fourth mapping relationship between the fourth wire location points and the fourth relative positioning data;

calculating a difference between each of the third wire location points and the corresponding first wire location point to obtain a plurality of first location differences, and calculating a difference between each of the fourth wire location points and the corresponding second wire location point to obtain a plurality of second location differences, where the third wire location point and the corresponding first wire location point have the same relative positioning data, and the fourth wire location point and the corresponding second wire location point have the same relative positioning data;

calculating a total deviation corresponding to each time point according to the first location difference and the second location difference corresponding to the time point; and

calculating the current location of the robotic mower in the working area according to the third relative positioning data and the fourth relative positioning data corresponding to the smallest total deviation.

It should be noted that the determining of the location of the robotic mower 10 in the working area according to the first mapping relationship, the second mapping relationship, the third mapping relationship, and the fourth mapping relationship is not limited to the above specific examples, and may also be implemented in other manners, which is not limited herein.

In the embodiments of the present disclosure, in the wire-following map building mode, the first mapping relationship and the second mapping relationship are respectively configured for the first positioning sensing assembly 121 and the second positioning sensing assembly 122 for subsequent positioning of the robotic mower 10. As such, the rapid and accurate positioning of the robotic mower 10 can be realized.

The determining of the location of the positioning sensing assembly (the first positioning sensing assembly 121 or the second positioning sensing assembly 122) on the wire 30 according to the first positioning signal and the second positioning signal (which may be equivalent to obtaining the location of the robotic mower 10 on the wire 30) is described in detail below.

As shown in FIG. 12 and FIG. 13, it is assumed that a signal generation device is arranged on a base station, the base station injects a first sensing signal s1 to a right wire segment L2 at a moment T0, the first sensing signal s1 is transmitted in the wire 30, the base station injects a second sensing signal s2 to a left wire segment L1 at a moment T2, the second sensing signal s2 is transmitted in the wire 30, and the first positioning sensing assembly 121 obtains a first positioning signal s1' at a moment T1 and obtains a second positioning signal s2' at a moment T3. As shown in FIG. 13, the x-axis represents time, and the y-axis represents the amplitude of the wave. The four sine waves from left to right shown in FIG. 13 are respectively the first sensing signal s1, the first positioning signal s1', the second sensing signal s2, and the second positioning signal s2'. A process of calculating the location of the robotic mower 10 on the wire 30 includes:

acquiring a first reception moment at which the first positioning signal is received and a second reception moment at which the second positioning signal is received; acquiring a first sending moment at which the first sensing signal is sent and a second sending moment at which the second sensing signal is sent; and

determining a wire length of the right wire segment L2 and a wire length of the left wire segment L1 based on a reception moment difference (T3-T1) (or phase difference) between the first reception moment and the second reception moment, a sending moment difference (T2-T0) (or phase difference) between the first sending moment and the second sending moment, a first propagation speed of the first sensing signal, and a second propagation speed of the second sensing signal, where the second propagation speed is equal to the first propagation speed.

In some optional implementations, the positioning sensing assemblies include a first positioning sensing assembly 121 and a second positioning sensing assembly 122, the first positioning sensing assembly 121 and the second positioning sensing assembly 122 are respectively arranged on the central axis of the robotic mower 10, and the first positioning sensing assembly 121 is closer to a head of the robotic mower 10 than the second positioning sensing assembly 122; and a first sensing axis of the first positioning sensing assembly 121 is parallel to a second sensing axis of the second positioning sensing assembly 122.

The first positioning sensing assembly 121 and the second positioning sensing assembly 122 are each an inductive sensor including a sensing coil therein. The first positioning sensing assembly 121 includes a first sensing coil and has a first sensitive axis. The second positioning sensing assembly 122 includes a second sensing coil and has a second sensitive axis. The first sensitive axis is parallel to the second sensitive axis.

For example, using the first positioning sensing assembly 121 as an example, the first sensing signal and the second sensing signal generate a magnetic field around the wire 30 during transmission along the wire 30. When the robotic mower 10 travels along the wire 30, the change of the magnetic field around the first sensitive axis causes a change in the current in the first sensing coil. The first positioning sensing assembly 121 collects current signals and fits the collected current signals to obtain signals that change regularly (the first positioning signal and the second positioning signal). It should be noted that the first sensing signal, the second sensing signal, the first positioning signal, and the second positioning signal may be sinusoidal signals or other types of signals, which is not limited herein. Similarly, the principle of acquiring the first positioning signal and the second positioning signal by the second positioning sensing assembly 122 is the same as that of the first positioning sensing assembly 121, so the details will not be repeated herein. It can be understood that because the first sensitive axis is parallel to the second sensitive axis, the first positioning sensing assembly 121 and the second positioning sensing assembly 122 may respectively detect the first sensing signal and the second sensing signal that come from the same direction at the first location and the second location, thus providing richer positioning information for the robotic mower 10.

In some optional implementations, the method further includes:

when the robotic mower travels to a turning area of the wire, controlling the robotic mower to perform pose adjustment to enable each positioning sensing assembly to travel to each location point of the turning area.

When the robotic mower is traveling, the pose of the positioning sensing assembly changes with the movement of the robotic mower. When it is determined that the robotic mower travels to a turning area of the wire 30, a rotation of the robotic mower causes the sensing axis of the positioning sensing assembly to turn.

Therefore, the robotic mower 10 needs to be controlled to adjust the pose, to enable the positioning sensing assembly on the robotic mower 10 to cover each location point of the turning area on the wire 30, thereby achieving the accurate positioning of the robotic mower 10 during turning.

In some optional implementations, controlling the robotic mower to perform pose adjustment to enable each positioning sensing assembly to travel to each location point of the turning area includes:

controlling the robotic mower move forward along a current wire segment of the wire 30; after the second positioning sensing assembly 122 detects a turning point, controlling the robotic mower to rotate with the turning point as a circle center to cause the robotic mower to face a next wire segment; and after the rotation is completed, controlling the robotic mower to move backward until the first positioning sensing assembly 121 detects the turning point, and controlling the robotic mower move forward along the next wire segment; or
controlling the robotic mower move forward along the current wire segment; and after the second positioning sensing assembly 122 detects the turning point, controlling the robotic mower to move backward until the first positioning sensing assembly 121 detects the turning point, controlling the robotic mower to rotate with the first positioning sensing assembly 121 as a circle center to cause the robotic mower to face the next wire segment, and controlling the robotic mower move forward along the next wire segment.

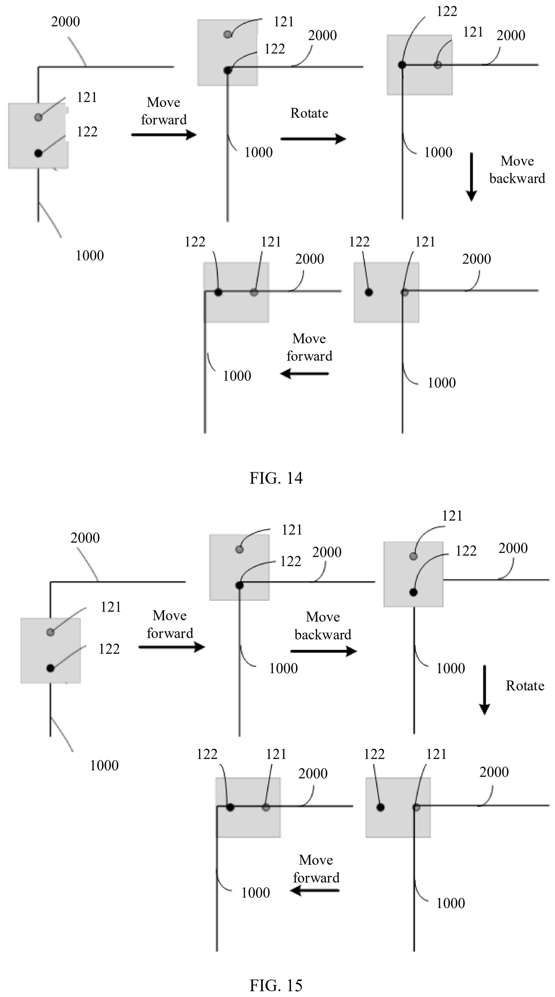

For example, as shown in FIG. 14 and FIG. 15, the turning area includes a first wire segment 1000 (current wire segment) and a second wire segment 2000 (next wire segment) connected to the first wire segment 1000. The robotic mower 10 may turn in the turning area in either of two turning modes.

First turning mode: FIG. 14 is a schematic diagram showing turning of the robotic mower 10 during traveling. Referring to FIG. 14, a specific process of turning of the robotic mower 10 is as follows. The robotic mower 10 moves forward on the first wire segment 1000 until the second positioning sensing assembly 122 detects a turning point. After the second positioning sensing assembly 122 detects the turning point, the robotic mower 10 is controlled to rotate toward the second wire segment 2000 with the second positioning sensing assembly 122 as a rotation center. After completing the rotation, the robotic mower 10 moves backward along the second wire segment 2000 until the first positioning sensing assembly 121 detects a signal from the turning point. Then, the robotic mower 10 is controlled to normally travel on the second wire segment 2000.

Second turning mode: FIG. 15 is a schematic diagram showing turning of the robotic mower 10 during traveling. Referring to FIG. 15, a specific process of turning of the robotic mower 10 is as follows. The robotic mower 10 moves forward on the first wire segment 1000 until the second positioning sensing assembly 122 detects a turning point. After the second positioning sensing assembly 122 detects the turning point, the robotic mower 10 is controlled to move backward along the first wire segment 1000. Then, the robotic mower 10 is controlled to rotate toward the second wire segment 2000, such that the first positioning sensing assembly 121 is located just at the turning point. As such, the first positioning sensing assembly 121 can travel to each location point of the turning area without requiring any additional forward or backward movement. Finally, the robotic mower 10 is controlled to travel normally on the second wire segment 2000.

In the embodiments of the present disclosure, the robotic mower 10 is controlled to perform operations such as rotation and backward movement, to enable both the first positioning sensing assembly 121 and the second positioning sensing assembly 122 on the robotic mower 10 to travel to each location point of the turning area, such that the constructed first mapping relationship and second mapping relationship can cover all the locations on the wire 30, which is conducive to realizing the rapid and accurate positioning of the robotic mower 10.

In another implementation of the present disclosure, the method further includes:
determining boundary signals propagating along a plurality of third sensitive axes according to a third sensing signal in the wire; and determining a location of the robotic mower moving forward along the wire according to the boundary signals.

The plurality of the third sensitive axes 1231 are parallel to each other.

In an embodiment, a plurality of boundary sensing assemblies 123 are arranged on the robotic mower 10, and each boundary sensing assembly 123 has a third sensitive axis 1231. The third sensitive axis 1231 is parallel to a center line of an inductance coil of the boundary sensing assembly.

In an embodiment, the boundary signal is used for determining a location of the robotic mower 10 relative to the wire 30. For example, in an application scenario, two boundary sensing assemblies 123 are arranged on the robotic mower 10. When the robotic mower 10 is working, the wire 30 is located between the two boundary sensing assemblies 123. According to the boundary signals determined from the third sensing signal in the wire 30, the current execution entity can determine whether the location of the robotic mower 10 is offset relative to the wire 30, and correct the offset, such that the distances between the wire 30 and the two boundary sensing assemblies 123 of the robotic mower 10 are the same.

In the process of determining the location of the robotic mower 10 moving forward along the wire 30 according to the plurality of boundary signals, the current execution entity may calculate the distance between each boundary sensing assembly 123 and the wire 30 according to the plurality of boundary signals, and accordingly adjust the location of the robotic mower 10, such that the distances between the wire 30 and the boundary sensing assemblies 123 on the two sides of the wire 30 are the same. The current execution entity may also calculate the distances between the wire 30 and the boundary sensing assemblies 123 at the front and rear ends of the robotic mower 10 according to the plurality of boundary signals, and when the distances are not equal, change the location of the robotic mower 10 moving forward along the wire 30, such that the front end and the rear end of the robotic mower 10 do not easily deviate from the wire 30. In other words, when the robotic mower 10 travels with the wire 30 sandwiched between the boundary sensing assemblies 123, the magnetic field direction detected by the boundary sensing assembly 123 on the left side of the central axis of the robotic mower 10 is opposite to the magnetic field direction detected by the boundary sensing assembly 123 on the right side of the central axis. Therefore, the magnetic field directions of the two boundary signals obtained by the current execution entity are opposite. The current execution entity controls the robotic mower 10 to travel along the wire 30 according to the magnetic field directions and magnetic field strengths of the boundary signals.

Through the determining of the boundary signals, the location of the robotic mower 10 moving forward along the wire 30 can be corrected, thereby improving the positioning accuracy of the robotic mower 10.

In an implementation, the method further includes:

controlling the robotic mower in the following manner to cause the robotic mower to travel along the wire:

sensing a boundary signal transmitted on the wire by at least one boundary sensing assembly; and

controlling the robotic mower to travel along the wire according to the boundary signal. When there is one boundary sensing assembly, the boundary sensing assembly is arranged on the central axis of the robotic mower. When there are more than one boundary sensing assemblies, at least one boundary sensing assembly is arranged on each of the two sides of the central axis. The sensitive axis of each boundary sensing assembly is perpendicular to a working surface of the robotic mower, and the sensitive axis of each boundary sensing assembly is perpendicular to the sensitive axis of each positioning sensing assembly.

For example, assuming that there is only one boundary sensing assembly 123, the boundary sensing assembly 123 is arranged on the central axis of the robotic mower 10, and the distance between the boundary sensing assembly 123 and the first positioning sensing assembly 121 is less than the distance between the boundary sensing assembly 123 and the second positioning sensing assembly 122.

It is assumed that there are two boundary sensing assemblies 123. As shown in FIG. 11, the two boundary sensing assemblies 123 are respectively arranged on two sides of the central axis of the robotic mower 10. A low-frequency boundary signal is transmitted on the wire 30. When the wire 30 is located in the middle of the two boundary sensing assemblies 123, magnetic field signals detected by the two boundary sensing assemblies 123 have opposite directions and similar magnetic field strengths. When the wire 30 is located outside or inside the robotic mower 10, the magnetic field directions detected by the two boundary sensing assemblies 123 are the same, and the magnetic field strength detected by the boundary sensing assembly 123 closer to the wire 30 is larger. Based on the above signal characteristics, the robotic mower 10 is controlled to travel along the wire 30.

It should be noted that the number of boundary sensing assemblies 123 is not limited to one or two, and may be set according to actual situations. For example, the number of boundary sensing assemblies 123 is 3, with two boundary sensing assemblies 123 being respectively arranged on the two sides of the central axis of the robotic mower 10, and one boundary sensing assembly 123 being arranged on the central axis of the robotic mower 10. The sensitive axes of the boundary sensing assemblies 123 are perpendicular to the working surface of the robotic mower 10, and the sensitive axes of the boundary sensing assemblies 123 are perpendicular to the sensitive axis of each positioning sensing assembly.

An embodiment of the present disclosure further provides a robotic mower, including a control module, a driving module, a mowing module, and a sensing module. The control module is respectively communicatively connected to the driving module, the mowing module, and the sensing module.

The mowing module is configured to perform mowing.

The driving module is configured to drive the robotic mower to move.

The sensing module includes at least two positioning sensing assemblies.

The control module is configured to execute the method for positioning a robotic mower according to any one of the above embodiments, and control operation of the driving module and the mowing module.

It should be noted that for the specific working process of the robotic mower, reference may be made to the working process in the method for positioning a robotic mower in the above embodiments, and the details will not be repeated herein.

Specifically, the mowing module includes an element configured to perform mowing.

The driving module includes a drive wheel and a drive motor.

The sensing module includes at least two positioning sensing assemblies, a boundary sensing assembly 123, collision sensors (a first collision sensor 5 and a second collision sensor 6 shown in FIG. 11), and lifting sensors (a first lifting sensor 7 and a second lifting sensor 8 shown in FIG. 11), and the like.

The collision sensors are each configured to detect whether the robotic mower 10 is impacted, detect a direction of the impact on the robotic mower 10, and accurately control the robotic mower 10 to move in an opposite direction.

The lifting sensors are each configured to detect whether the robotic mower 10 is in an off-ground state, and when the robotic mower 10 is lifted off the ground by an external force and a photoelectric switch is triggered, control the mowing module and the driving module to stop operation.

The control module is configured to communicate with the mowing module, the driving module, and the sensing module, and is configured to control the mowing module and the driving module in response to positioning information, collision information, lifting information, and the like of the robotic mower 10 acquired from the sensing module.

It should be noted that for the specific working process of the robotic mower, reference may be made to the working process in the method for positioning a robotic mower in the above embodiments, and the details will not be repeated herein.

It should be understood that, throughout the specification, "one embodiment" or "an embodiment" means that specific features, structures, or characteristics described with reference to the embodiment are included in at least one embodiment of the present disclosure. Therefore, appearances of "in one embodiment" or "in an embodiment" in various places throughout the specification do not necessarily refer to the same embodiment. In addition, the specific features, structures, or characteristics may be combined in one or more embodiments in any appropriate manner. It should be understood that the sequence numbers of the operations in the embodiments of the present disclosure do not imply an execution order, and the execution order of the processes should be determined by the functions and internal logic of the processes, thus the sequence numbers should not constitute any limitation on the implementation processes of the embodiments of the present disclosure. The sequence numbers of the embodiments of the present disclosure are only for the purpose of description, and do not represent the preference for the embodiments.

It should be noted that in the present disclosure, the terms "comprise," "include" or any other variants are intended to encompass non-exclusive inclusion, such that a process, a method, an article or an apparatus including a series of elements not only include those elements, but also includes other elements not listed explicitly or includes intrinsic elements for the process, the method, the article, or the apparatus. Without any further limitation, an element defined by the phrase "comprising one" does not exclude existence of other same elements in the process, the method, the article, or the apparatus that includes the elements.

In the several embodiments provided in the present disclosure, it is to be understood that the disclosed device and method may be implemented in other manners. The described device embodiments are only exemplary. For example, the division of the units is merely a logical function division and other division manners may be used in practical implementations. For example, a plurality of units or components may be combined or integrated into another system, or some features may be ignored or not performed. In addition, the shown or discussed mutual couplings or direct couplings or communication connections between the components may be implemented through some interfaces. The indirect couplings or communication connections between the devices or units may be implemented in electronic, mechanical, or other forms.

The units described as separate parts may or may not be physically separate. Parts displayed as units may or may not be physical units, and may be located in one position, or may be distributed over a plurality of network units. Some or all of the modules may be selected according to actual needs to achieve the objectives of the scheme of the embodiments of the present disclosure.

In addition, all functional units in embodiments of the present disclosure may be integrated into one processing unit, or each of the units may exist alone, or two or more units may be integrated into one unit. The integrated unit may be implemented in the form of hardware, or may be implemented in the form of a combination of hardware and a software functional unit.

Those having ordinary skills in the art can understand that all or some of the steps of the above method embodiments may be implemented by a program instructing relevant hardware. The program may be stored in a computer-readable storage medium. When the program is executed, the steps of the above method embodiments are performed. The storage medium includes various media capable of storing program codes, such as a removable storage device, a read-only memory (ROM), a magnetic disk, or an optical disk.

Alternatively, the integrated unit in the present disclosure may be stored in a computer-readable storage medium if implemented in the form of a software functional module and sold or used as an independent product. Based on such an understanding, the technical schemes of the embodiments of the present disclosure essentially or the part contributing to the related art may be implemented in the form of a software product. The software product is stored in a storage medium and includes several instructions for instructing a device to execute all or some of the steps of the methods described in the embodiments of the present disclosure. The storage medium includes various media capable of storing program codes, such as a removable storage device, a Read-Only Memory (ROM), a magnetic disk, or an optical disk.

The foregoing disclosure is merely exemplary embodiments of the present disclosure, and certainly is not intended to limit the protection scope of the present disclosure. Therefore, equivalent variations made in accordance with the claims of the present disclosure fall within the scope of the present disclosure.

**Claims**

1. A positioning sensing mechanism (1), arranged on a robotic mower (10) and comprising:

   a first positioning sensing assembly (121) having a first sensitive axis (1211); and
   a second positioning sensing assembly (122) having a second sensitive axis (1221);
   wherein a location of the robotic mower (10) on a wire (30) is determined based on a positioning signal propagating along the first sensitive axis (1211) and/or a positioning signal propagating along the second sensitive axis (1221), and the wire (30) is configured to define a working range of the robotic mower (10).

2. The positioning sensing mechanism (1) of claim 1, wherein the first positioning sensing assembly (121) and the second positioning sensing assembly (122) are arranged on a central axis of the robotic mower (10).

3. The positioning sensing mechanism (1) of claim 1 or 2, wherein the first sensitive axis (1211) and the second sensitive axis (1221) are perpendicular or parallel to each other.

4. A signal detection device (12), comprising:

   the positioning sensing mechanism (1) of any one of claims 1 to 3; and
   a boundary sensing mechanism (2), comprising a plurality of boundary sensing assemblies (123), wherein the positioning sensing mechanism (1) is arranged between/among the plurality of boundary sensing assemblies (123).

5. The signal detection device (12) of claim 4, wherein each of the boundary sensing assemblies (123) has a third sensitive axis (1231) and is configured to detect a boundary signal propagating along the respective third sensitive axis (1231), and the third sensitive axes (1231) of the plurality of the boundary sensing assemblies (123) are parallel to each other.

6. A robotic mower (10), comprising:

   a housing (11), provided with an accommodating cavity (100);
   the signal detection device (12) of claim 4 or 5, accommodated in the accommodating cavity (100);
   a mowing mechanism (13), fixed to the housing (11); and
   a walking mechanism (14), fixed to the housing (11).

7. The robotic mower (10) of claim 6, wherein a bottom of the accommodating cavity (100) is not lower than a lower edge of the housing (11).

8. The robotic mower (10) of claim 6, wherein the mowing mechanism (13) further comprises a cutter head assembly (9), and a bottom of the accommodating cavity (100) is not lower than a lowest position of the cutter head assembly (9).

9. The robotic mower (10) of claim 8, wherein a distance between the first positioning sensing assembly (121) and the second positioning sensing assembly (122) is greater than a diameter of the cutter head assembly (9).

10. The robotic mower (10) of claim 6, wherein the signal detection device (12) is located in the middle of the walking mechanism (14).

11. The robotic mower (10) of claim 6, wherein the signal detection device (12) is located on a central axis of the robotic mower (10).

12. A robotic mowing system, comprising:

   the robotic mower (10) of any one of claims 6 to 11;

a charging station (20); and

a wire (30), wherein the charging station (20) is configured to supply electrical energy to the robotic mower (10), and the wire (30) is connected to the charging station (20) and is configured to position the robotic mower (10) and define a working range of the robotic mower (10).

13. The robotic mowing system of claim 12, wherein the charging station (20) comprises a signal generation device electrically connected to the wire (30) and configured to alternately send a positioning signal of a first frequency and a boundary signal of a second frequency to the wire (30).

14. The robotic mowing system of claim 12, wherein the charging station (20) comprises a signal generation device connected to two ends of the wire (30), wherein the positioning signal comprises a first signal and a second signal; and

the signal generation device is configured to send the first signal to a first end of the wire (30), send the second signal to a second end of the wire (30), and send a boundary signal to the first end or the second end.

15. The robotic mowing system of claim 14, wherein the first signal and the second signal are of the same type.

16. The robotic mowing system of claim 14, wherein there is a first time interval between the first signal and the second signal.

17. The robotic mowing system of claim 13, wherein there is a second time interval between the positioning signal and the boundary signal.

18. The robotic mowing system of claim 13, wherein the positioning signal is a sine wave signal or a cosine wave signal, and the boundary signal is a square wave signal.

19. The robotic mowing system of any one of claims 13 to 18, wherein a number of sine waves or cosine waves in the positioning signal is not less than 8, and a number of square waves in the boundary signal is not less than 3.

20. The robotic mowing system of any one of claims 13 to 18, wherein a ratio of the first frequency to the second frequency is not less than 5.

21. A method for positioning a robotic mower, comprising:

acquiring a first positioning signal propagating along a first sensitive axis by a first positioning sensing assembly;

acquiring a second positioning signal propagating along a second sensitive axis by a second positioning sensing assembly; and

determining a location of the robotic mower on a wire according to the first positioning signal and/or the second positioning signal, wherein the wire is configured to define a working range of the robotic mower.

22. The method for positioning a robotic mower of claim 21, wherein the determining a location of the robotic mower on a wire according to the first positioning signal and/or the second positioning signal comprises:

calculating the location of the robotic mower on the wire according to a moment at which the first positioning signal is received, a transmission speed of a first sensing signal in the wire, and a moment at which the first sensing signal is sent, and/or according to a moment at which the second positioning signal is received, a transmission speed of a second sensing signal in the wire, and a moment at which the second sensing signal is sent, wherein the first positioning signal is determined according to the first sensing signal, and the second positioning signal is determined according to the second sensing signal.

23. The method for positioning a robotic mower of claim 21, wherein the determining a location of the robotic mower on a wire according to the first positioning signal and/or the second positioning signal comprises:

in a process of the robotic mower traveling on the wire, acquiring the first positioning signal by the first positioning sensing assembly to determine the location of the robotic mower on the wire; and when an angle between a central axis of the robotic mower and the wire is not less than a first preset value, acquiring the second positioning signal by the second positioning sensing assembly or acquiring the first positioning signal and the second positioning signal by the first positioning sensing assembly and the second positioning sensing assembly to determine the location of the robotic mower on the wire.

24. The method for positioning a robotic mower of claim 21, wherein before the acquiring the second positioning signal by the second positioning sensing assembly or acquiring the first positioning signal and the second positioning signal by the first positioning sensing assembly and the second positioning sensing assembly to determine the location of the robotic mower on the wire, the method further comprises:

determining a distance between the robotic mower and the wire; and

when the distance is not greater than a second preset value, executing the step of acquiring the second positioning signal by the second positioning sensing assembly or acquiring the first positioning signal and the second positioning signal by the first positioning sensing assembly and the second positioning sensing assembly to determine the location of the robotic mower on the wire.

25. The method for positioning a robotic mower of claim 21, wherein when the first sensitive axis is parallel to the second sensitive axis, the method further comprises:

using at least two positioning sensing assemblies to sense a first sensing signal and a second sensing signal transmitted on the wire, to obtain a first positioning signal and a second positioning signal corresponding to each positioning sensing assembly, wherein the at least two positioning sensing assemblies comprise a first positioning sensing assembly and a second positioning sensing assembly arranged on the robotic mower at a front side and a rear side of the robotic mower respectively; and

determining a current location of the robotic mower according to the first positioning signal and the second positioning signal in response to a positioning instruction.

26. The method for positioning a robotic mower of claim 25, wherein the determining a current location of the robotic mower according to the first positioning signal and the second positioning signal in response to a positioning instruction comprises:

in a process of the robotic mower traveling along the wire, in response to the positioning instruction, calculating a location point of the first positioning sensing assembly on the wire as a third wire location point according to the first positioning signal and the second positioning signal acquired by the first positioning sensing assembly, and acquiring a location of the robotic mower in a working area as third relative positioning data by using a positioning sensing mechanism; in response to the positioning instruction, calculating a location point of the second positioning sensing assembly on the wire as a fourth wire location point according to the first positioning signal and the second positioning signal acquired by the second positioning sensing assembly, and acquiring a location of the robotic mower in the working area as fourth relative positioning data by using the positioning sensing mechanism; and

determining the current location of the robotic mower in the working area according to the third wire location point, the third relative positioning data, the fourth wire location point, and the fourth relative positioning data and based on a first mapping relationship and a second mapping relationship which are preset, wherein the first mapping relationship is a mapping relationship between a first wire location point associated with the first positioning sensing assembly and first relative positioning data, and the second mapping relationship is a mapping relationship between a second wire location point associated with the second positioning sensing assembly and second relative positioning data.

27. The method for positioning a robotic mower of claim 26, wherein the first mapping relationship and the second mapping relationship are obtained in the following manner:

in response to a wire-following map building instruction, entering a wire-following map building mode and controlling the robotic mower to travel one lap along the wire; in the process of the robotic mower travelling one lap along the wire, using the first positioning sensing assembly to determine a plurality of location points of the first positioning sensing assembly on the wire as first wire location points, using the positioning sensing mechanism to acquire the location of the robotic mower in the working area as the first relative positioning data, and constructing the first mapping relationship between the first wire location points and the first relative positioning data; and in the process of the robotic mower travelling one lap along the wire, using the second positioning sensing assembly to determine a plurality of location points of the second positioning sensing assembly on the wire as second wire location points, using the positioning sensing mechanism to acquire the location of the robotic mower in the working area as the second relative positioning data, and constructing the second mapping relationship between the second wire location points and the second relative positioning data.

28. The method for positioning a robotic mower of any one of claims 25 to 27, further comprising:
in response to the robotic mower traveling to a turning area of the wire, controlling the robotic mower to perform pose adjustment to enable each of the positioning sensing assemblies to travel to each location point of the turning area.

**29.** The method for positioning a robotic mower of claim 28, wherein the controlling the robotic mower to perform pose adjustment to enable each of the positioning sensing assemblies to travel to each location point of the turning area comprises:

controlling the robotic mower move forward along a current wire segment of the wire; after the second positioning sensing assembly detects a turning point, controlling the robotic mower to rotate with the turning point as a circle center to cause the robotic mower to face a next wire segment; and after the rotation is completed, controlling the robotic mower to move backward until the first positioning sensing assembly detects the turning point, and controlling the robotic mower move forward along the next wire segment; or
controlling the robotic mower move forward along the current wire segment; and after the second positioning sensing assembly detects the turning point, controlling the robotic mower to move backward until the first positioning sensing assembly detects the turning point, controlling the robotic mower to rotate with the first positioning sensing assembly as a circle center to cause the robotic mower to face the next wire segment, and controlling the robotic mower move forward along the next wire segment.

**30.** A robotic mower, comprising a control module, a driving module, a mowing module, and a sensing module, wherein the control module is respectively communicatively connected to the driving module, the mowing module, and the sensing module;

the mowing module is configured to perform mowing;
the driving module is configured to drive the robotic mower to move;
the sensing module comprises at least two positioning sensing assemblies; and
the control module is configured to execute the method for positioning a robotic mower of any one of claims 21 to 29, and control operation of the driving module and the mowing module.

FIG. 1

FIG. 2

FIG. 3

FIG. 4

112

B

B

A

FIG. 5

A

123

122

100

121

123

FIG. 6

B-B

112

C

FIG. 7

C

123

100

121

122

FIG. 8

Acquire a first positioning signal propagating along a first sensitive axis by a first positioning sensing assembly

101

Acquire a second positioning signal propagating along a second sensitive axis by a second positioning sensing assembly

102

Determine a location of the robotic mower on a wire according to the first positioning signal and/or the second positioning signal

103

FIG. 9

Use at least two positioning sensing assemblies to sense a first sensing signal and a second sensing signal transmitted on the wire, to obtain a first positioning signal and a second positioning signal corresponding to each positioning sensing assembly

201

Determine a current location of the robotic mower according to the first positioning signals and the second positioning signals in response to a positioning instruction

202

FIG. 10

123

FIG. 11

FIG. 12

FIG. 13

FIG. 14

FIG. 15

## INTERNATIONAL SEARCH REPORT

| | International application No. |
|---|---|
| | **PCT/CN2024/070866** |

| | |
|---|---|
| **A.** | **CLASSIFICATION OF SUBJECT MATTER** |
| | A01D34/00(2006.01)i |

According to International Patent Classification (IPC) or to both national classification and IPC

| | |
|---|---|
| **B.** | **FIELDS SEARCHED** |

Minimum documentation searched (classification system followed by classification symbols)

IPC:A01D

Documentation searched other than minimum documentation to the extent that such documents are included in the fields searched

Electronic data base consulted during the international search (name of data base and, where practicable, search terms used)

CNTXT, ENTXTC, CJFD: 割草机, 定位, 传感, 检测, 位置, 轴线, 垂直, 平行, 边界, 导线, 区域, 信号, 充电, 频率, 转向, 转弯, 拐弯, 拐点, 判断, 距离, 指令, 建图, 巡线; VEN, WPABS, ENTXT: mower, location, detect, axes, uprightness, parallel, border, wire, guide line, signal, charge, frequency, turn, estimate, inflexion, distance, map, line-following.

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | US 2014379196 A1 (DEERE & COMPANY) 25 December 2014 (2014-12-25)<br>description, paragraphs 1-30, and figures 1-5 | 1-21, 30 |
| Y | CN 103542800 A (DEERE & COMPANY) 29 January 2014 (2014-01-29)<br>description, paragraphs 43-105, and figures 1-18 | 1-21, 30 |
| Y | CN 114629190 A (NANJING CHERVON INDUSTRY CO., LTD.) 14 June 2022<br>(2022-06-14)<br>description, paragraphs 29-114, and figures 1-15 | 1-21, 30 |
| Y | US 3550714 A (MOWBOT, INC.) 29 December 1970 (1970-12-29)<br>description, column 3, line 43 to column 10, line 8, and figures 1-10 | 1-21, 30 |
| A | CN 112256013 A (SUZHOU CLEVA PRECISION MACHINERY & TECHNOLOGY CO.,<br>LTD.) 22 January 2021 (2021-01-22)<br>entire document | 1-30 |
| A | CN 114995433 A (SHANGHAI SUNSEEKER ROBOTIC TECHNOLOGY CO., LTD.) 02<br>September 2022 (2022-09-02)<br>entire document | 1-30 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 April 2024** | **09 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/070866**

| Patent document cited in search report | | | Publication date (day/month/year) | Patent family member(s) | | | Publication date (day/month/year) |
|---|---|---|---|---|---|---|---|
| US | 2014379196 | A1 | 25 December 2014 | US | 9072219 | B2 | 07 July 2015 |
| | | | | EP | 2853975 | A2 | 01 April 2015 |
| | | | | EP | 2853975 | A3 | 18 November 2015 |
| | | | | EP | 2853975 | B1 | 04 October 2017 |
| CN | 103542800 | A | 29 January 2014 | US | 2014012418 | A1 | 09 January 2014 |
| | | | | US | 9072218 | B2 | 07 July 2015 |
| | | | | EP | 2684438 | A1 | 15 January 2014 |
| | | | | EP | 2684438 | B1 | 04 April 2018 |
| | | | | CN | 103542800 | B | 21 June 2019 |
| CN | 114629190 | A | 14 June 2022 | WO | 2022127525 | A1 | 23 June 2022 |
| | | | | CN | 114679949 | A | 01 July 2022 |
| | | | | CN | 114690748 | A | 01 July 2022 |
| | | | | CN | 114690758 | A | 01 July 2022 |
| | | | | CN | 114764237 | A | 19 July 2022 |
| | | | | EP | 4226756 | A1 | 16 August 2023 |
| | | | | US | 2023266769 | A1 | 24 August 2023 |
| | | | | US | 11815901 | B2 | 14 November 2023 |
| US | 3550714 | A | 29 December 1970 | DE | 1457934 | A1 | 10 April 1969 |
| | | | | GB | 1130522 | A | 16 October 1968 |
| CN | 112256013 | A | 22 January 2021 | WO | 2021003911 | A1 | 14 January 2021 |
| CN | 114995433 | A | 02 September 2022 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023103038194
- CN 2023206432094
- CN 2023111388575